# EUROPEAN PATENT SPECIFICATION

(11) **EP 1 551 146 B1**
(45) Date of publication and mention of the grant of the patent: **24.08.2011**
(21) Application number: 04031071.6
(22) Date of filing: 30.12.2004
(51) Int. Cl.: H04L 29/06, H04N 1/00, H04N 1/32, G06F 1/00

(54) **Document security management for repeatedly reproduced hardcopy and electronic documents**
Dokumentsicherheitsmanagement für wiederholt wiedergebbare Ausdrucke von elektronischen Dokumenten
Gestion de sécurité de documents informatiques répétitivement reproductibles

(30) Priority: 05.01.2004 JP 2004000250; 09.02.2004 JP 2004032083; 09.11.2004 JP 2004324895
(43) Date of publication of application: 06.07.2005
(73) Proprietor: Ricoh Company, Ltd., Tokyo 143-8555 (JP)
(72) Inventor: Saitoh, Atsuhisa, Yokohama-shi Kanagawa (JP)
(74) Representative: Schwabe - Sandmair - Marx

(56) References cited:
- EP-A- 0 715 245
- EP-A- 0 862 318
- EP-A- 1 220 076
- EP-A1- 1 515 222
- WO-A1-03/107171
- US-A- 5 444 779
- US-A1- 2003 004 988
- FOX A ET AL: "Security On the Move: Indirect Authentication Using Kerberos" UNIVERSITY OF CALIFORNIA, 1996, XP002188116
- PLIMMER J J: "Digital protection in a digital age" PROCEEDINGS OF THE SPIE, SPIE, BELLINGHAM, VA, US, vol. 3314, 1998, pages 132-139, XP002310693 ISSN: 0277-786X

## Description

### BACKGROUND OF THE INVENTION

### 1. Field of the Invention

The present invention generally relates to maintenance and management of information security, and particularly to a document security managing technique that can control and keep information security across multiple domains. The present invention also relates to a document security managing technique that can guarantee information security even under the circumstances in which reproduction of electronic data and hardcopies are repeated sequentially using various types of image reproducing apparatuses, including printers, scanners copy machines, and facsimile machines.

### 2. Description of Related Art

In recent years and continuing, how to secure information resources has been increasing in concern, regardless of individuals or business organizations. Behind this trend is the spread of computer viruses, existence of security holes, necessity for security control for client information, and demand for enhanced information systems. There are many information security standards, such as ISO 15408, ISO 17799, BS 7799, or ISMS, and ordinary offices are establishing security policies and/or implementing information security management.

For example, "policy-based" document security systems have been developed to realize uniform and consistent document management. In such systems, a guideline for management of document security is established as "document security policy", and documentation systems and various types of machines and equipment link up with each other.

The policy is described as sequences of rules in a rule table. A server may implements security management for document creation and/or copy jobs in an integrated fashion, using the rule table. By placing the server in a domain, a document security management and maintenance system can be structured in the domain. In this case, the security of documents is controlled using document identifiers and user attributes registered in advance.

For electronic documents created by computers or word processors, documents can be protected by giving an identifier to each electronic document and by encrypting the file. The identifier and the attribute of the electronic document are managed as a profile. A policy-based document security management system can be realized using a security server for managing access authorization using a dedicated program for opening electronic documents.

On the other hand, information management for hardcopies (or paper documents) has also to be considered. In this case, when printing image data, an identifier is given to the image data, and is printed out together with the image data. To realize a policy-based security management for paper documents, the image data ID and other information embedded in the printed image during the printing operation are managed as a profile. When the printed medium (with the reproduced image on it) is scanned or copied, the embedded identifier is read from the printed medium, and is used to check with the security server for the accessing right.

To transmit and receive documents in an electronic form among domains using different security policies, the policy-based document security management technique can be applied as it is, by describing the destination address to inquire about the document security policy.

However, it is unrealistic for printed (hardcopy) documents to embed the address of security policy inquiry in the image data and to print it together with the image data, due to the variety of embedding formats, limitation of printing space, and the ability of scanning means.

To overcome this problem, JP 7-14129A proposes to provide a trusted third party (TTP) to control multiple domains and establish.an integrated security policy across the domains. The TTP determines whether there is an accessing right for each access request across the domains in order to realize security management in the open and distributed environment.

However, it is difficult to establish an integrated document security policy across the domains connected in the open environment. Even if such an integrated security policy is created, authorization for determination of the access right has to be assigned to the third party.

In addition, even if document management is carried out correctly within or across domains using the security server or the TTP system, the security is easily lost once a document is utilized over the expected security range designed for the system. For example, if a confidential paper document reproduced from a protected electronic document is used repeatedly through photocopy, scan, or facsimile transmission, it becomes difficult to chase and confirm whether the security is still maintained.

Still another problem is the possibility of tampering with the ID information embedded in the image or the text, and degradation or alteration of the ID itself due to repeatedly executed copy jobs. In this case, ID information cannot be read correctly.

EP 1 220 076 A describes a document printer which includes an authenticity verifier for examining an electronic document to verify predetermined authentication information in the electronic document. The authentication information may be an electronic signature, or a digital watermark. The authenticity verifier may be included in the printer controller, and examines the authentication information of the document to verify that the document is unchanged from when it was transmitted by the source computer, and for authenticating the source of the document. If the authenticity verifier confirms the authentication information, the printer automatically performs one print function, such as printing the document with an authentication mark.; If the authenticity verifier does not confirm the authentication information, the printer automatically performs a different print function, such as not printing the document, or printing the document with an authenticity warning.

Publication Fox et al., "Security On the Move: Indirect Authentication Using Kerberos", University of California, 1996, XP002188116 describes Charon, an implemented protocol based on Kerberos for indirect authentication and secure communications with PDA-class mobile devices. Charon provides benefits to the clients, wherein the benefits are realized without requiring the full Kerberos library to be implemented on the client: instead the functionality is partitioned between the client and the server.

US-5,444,779 A describes an electronic copyright royalty accounting system using glyphs. A system for utilizing a printable, yet unobtrusive glyph or similar two-dimensionally encoded mark to identify copyrighted documents is described. Upon attempting to reproduce such a document, the glyph is detected, decoded and used to accurately collect and/or record a copyright royalty for the reproduction of the document, or to prevent such reproduction. Furthermore, the glyph may also include additional information so as to enable an electronic copyright royalty accounting system, capable of interpreting the encoded information, to track and/or account for copyright royalties which accrue during reproduction of all or portions of the original document.

WO 03/107171 A describes a printer, server, print system, data receiving device and data sending/receiving system. A print client obtains printer position information on a printer from the printer in advance. For example, when sending print data to the printer, the print client generates print sending data, created by adding the printer position information concerning the printer to the print data, and sends it. Upon receiving the print sending data, the printer prints the print data only when the printer position information included in the print sending data matches the printer position information at that time. This ensures the security of print sending data sent from the client to the printer over a network.

### SUMMARY OF THE INVENTION

The invention is defined by the subject-matter of the independent claims. The dependent claims are directed to advantageous embodiments.

### ADVANTAGES OF THE INVENTION

Advantagelously, it is

provided a document security managing technique for realizing consistent security management across multiple domains, while applying individual security policies.

Advantageously, it is provided a document security managing technique that can trace back the security control state even if a document is reproduced repeatedly through print jobs or copy jobs.

Advantagelously, it is provided a document security managing technique that can reliably control and maintain document security without passing authorization of determination as to the access right to an external party.

Advantagelously, it is provided a document security management method for controlling document security across a plurality of domains is provided.

With the method, even if a document under a security control of a certain domain is to be processed in another domain, permissibility of the processing of the document is inquired about at the home domain of the document, and accordingly, the security of the document can be maintained across multiple domains.

In a preferred example, the method may further includes the steps of:
(d) authenticating an access of the image forming and reproducing apparatus to the system when the image forming and reproducing apparatus accesses to the system; and
(e) issuing a system ticket to the image forming and reproducing apparatus when the authentication succeeds.

In this case, the image forming and reproducing apparatus accesses the second security server using the system ticket and location information.

Thus, only authorized access can be received at the second domain, and the inter-domain security can be maintained.

Advantageously, document security management system for controlling document security across a plurality of domains is provided.

This system realizes document security management across multiple domains.

Advantageously, a security server connected via a network to an image forming and reproducing apparatus to control the security of a document to be reproduced by the image forming and reproducing apparatus is provided.

This arrangement allows the document reproduction history to be traced back, based on the source information recorded in the profile managing table, even if the document under security control is reproduced beyond the expected range.

Advantageously, a document security management method includes the steps of:
(a) when an electronic document is created by an image forming and reproducing apparatus, creating and recording a first profile of the electronic document in a first profile managing table, and
(b) when a physical document is created by the image forming and reproducing apparatus, creating and recording a second profile of the physical document in a second profile managing table.

By recording the source information in the profile of the newly created physical document, the document reproduction history can be traced back.

### BRIEF DESCRIPTION OF THE DRAWINGS

Other objects, features, and advantages of the present invention will become more apparent from the following detailed description when read in conjunction with the accompanying drawings, in which:
FIG. 1 is a schematic diagram illustrating an example of document security management performed in a domain according to an embodiment of the invention;
FIG. 2 is a schematic diagram illustrating a document security management system across domains according to the first embodiment of the invention;
FIG. 3 is a diagram illustrating examples of the locations of the security servers belonging to the associated domains;
FIG. 4 is a sequence diagram of document security management performed across domains according to the first embodiment of the invention;
FIG. 5 is a schematic diagram illustrating a document security management system across domains according to the second embodiment of the invention;
FIG. 6 is a schematic diagram illustrating an example of the operations panel of a scanner (or a copier) placed in a domain;
FIG. 7 is a sequence diagram of document security management performed across domains according to the second embodiment of the invention;
FIG. 8 is a schematic diagram illustrating a document security management system across domains according to the third embodiment of the invention;
FIG. 9 is a sequence diagram of document security management performed across domains according to the third embodiment of the invention;
FIG. 10 is a schematic diagram illustrating a document security management system according to the fourth embodiment of the invention;
FIG. 11 is a sequence diagram of document security management performed across domains according to the fourth embodiment of the invention;
FIG. 12 is a diagram illustrating an example of profile information managed in the conventional security server;
FIG. 13 is a schematic diagram illustrating a document security management system according to the fifth embodiment of the invention using a document profile managing table and a print profile managing table;
FIG. 14A illustrates an example of the print profile managing table, and FIG. 14B illustrates an example of the document profile managing table;
FIG. 15A illustrates an example of detained information described in the print profile managing table, and FIG. 15B illustrates an example of detailed information descried in the document profile managing table;
FIG. 16 illustrates an example of access log recorded in the security server;
FIG. 17 is a schematic diagram illustrating tracable source IDs successively added to the profile through reproductions of document;
FIG. 18A is a sequence diagram of the profile processing performed when a print job is executed in the system, in which an ID pattern is created by the security server;
FIG. 18B is a sequence diagram of the profile processing performed when a print job is executed in the system, in which an ID pattern is created by the client application;
FIG. 18C is a sequence diagram of the profile processing performed when a print job is executed in the system, in which an ID pattern is created by the printer;
FIG. 19A is a sequence diagram of the profile processing performed when a scan job is executed in the system, in which a print ID is extracted in the scanner;
FIG. 19B is a sequence diagram of the profile processing performed when a scan job is executed in the system, in which extraction of the print ID and removal of the ID pattern are carried out in the security server;
FIG. 19C is a sequence diagram of the profile processing performed when a scan job is executed in the system, in which extraction of the print ID and removal of the ID pattern are carried out in the document server;
FIG. 20A is a sequence diagram of the profile processing performed when a copy job is executed in the system, in which the pattern processing is carried out in the copier;
FIG. 20B is a sequence diagram of the profile processing performed when a copy job is executed in the system, in which the pattern processing is carried out in the security server;
FIG. 21 is a schematic diagram illustrating a document security management system applied to multiple domains according to the sixth embodiment of the invention;
FIG. 22 is a sequence diagram of document security management across domains according to the sixth embodiment of the invention;
FIG. 23 illustrates an example of a two-dimensional code consisting of a dot pattern;
FIG. 24 illustrates an example of cell arrangement in the two-dimensional code;
FIG. 25 illustrates an example of updating the dot pattern;
FIG. 26 illustrates an example of marking a clear code when scanning the two-dimensional code; and
FIG. 27 illustrates an example of dot pattern decode window displayed on the monitor screen.

### DETAILED DESCRIPTION OF THE PREFERRED EMBODIMENT

The preferred embodiments of the present invention are now explained below in conjunction with attached drawings.

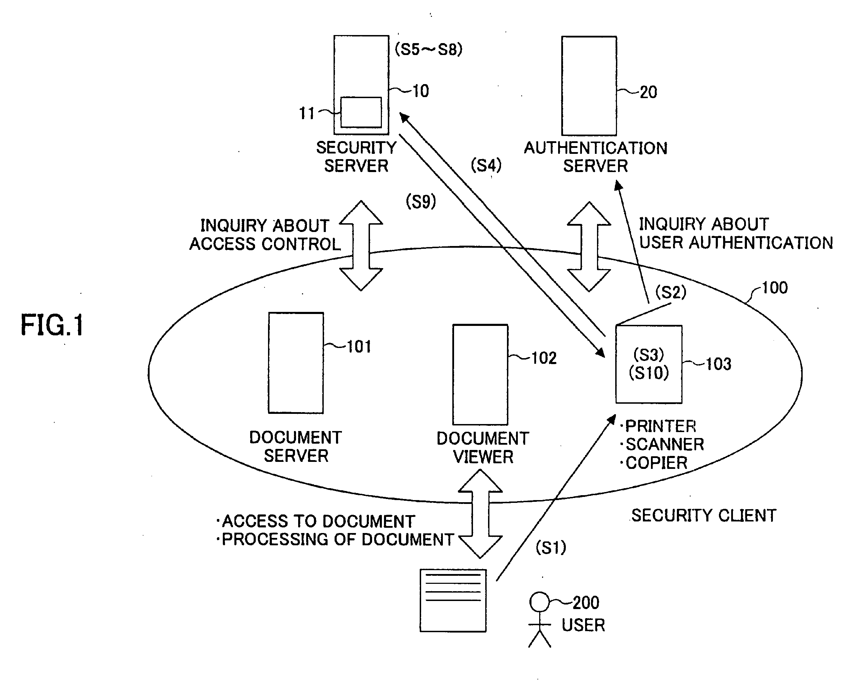

FIG.1 is a schematic diagram illustrating an example of document security management performed in a domain according to an embodiment of the invention.

In the example shown in FIG. 1, a document management system 101, a document viewer 102, and an image forming/reproducing apparatus 103 (such as a printer, a scanner, and a copier) are arranged in a location 100 in an office. An authentication server 20 and a security server 10 are provided in common for multiple locations 100. The authentication server 20 authenticates a user 200 who is going to operate the information equipment 103. The security server 10 integrally controls the security of documents within a domain, according to the document attributes, the user attributes,_and the access processing states.

Upon an access request or a document processing request for a document administered in the location 100 issued from the user 200, the associated apparatus or system 101, 102, or 103 transmits a request for user authentication, together with the attribute information input by the user 200, to the authentication server 20, and it receives an authentication ticket from the server 20. Then, using the authentication ticket, the associated system or apparatus acquires permission from the security server 10 under the security control to execute the requested job.

The authentication server 20 authenticates the user based on a user management table in which the names and the positions of registered users are recorded. If the user is registered in the table, the authentication server 20 generates a authentication ticket.

The security server 10 determines access permissibility for the requested documents in an integrated fashion, using a rule table 11 created based on the document security policy. In the rule table 11, the categories and the confidentiality levels of the respective documents are described.

The rule table 11 may include a user managing table describing authorization levels of the respective users in conjunction with user security, a document profile managing table describing security attributes of the respective documents, a print profile managing table describing print security attributes of the printing jobs, and a zone managing table describing which systems or apparatuses belong to which zones or sections, although not shown in FIG 1.

For example, when making a photocopy of a paper document (hardcopy document), the user 200 inputs a copy job request to the copier 103 (S1). The copier 103 queries the user authentication server 20 for the authenticity of the user 200, and receives an authentication ticket (S2). The copier 103 scans the paper document and acquires the documents ID from the paper document (S3).

Then, the copier 103 queries the security server 10 for the authorization of the copy job of the requested document, using the authentication ticket and the document ID (S4). The security server 10 searches for the authorization level of the user 200 and the print profile of the hardcopy document in the user managing table and the print profile managing table, respectively (S5 and S6). The security server 10 also searches for the document profile corresponding to the print profile in the document profile managing table (S7). The security server 10 further searches for the zone, to which the copier 103 belongs, in the zone managing table (S8). The security server 10 acquires the user authorization information based on the rule defined in the document security policy, as well as the user authorization level, the document profile, and the zones acquired in steps S5, S7 and S8. The security server 10 transmits the user authorization information back to the copier 103 (S9).

The copier executes the copy job based on the acquired user authorization (S10).

An identifier is given to the electronic data produced during the scan, and the electronic document is encrypted. Thus, the newly produced electronic document is protected and managed under the identifier. The inquiry for the access authorization can be made on the security server 10, using a dedicated program for opening the electronic document

Alternatively, the identifier descried in the print profile managing table may be added to and printed together with the scanned image. In this case the identifier may be read from the hardcopy document and is used to query the security server 10 for the access authentication.

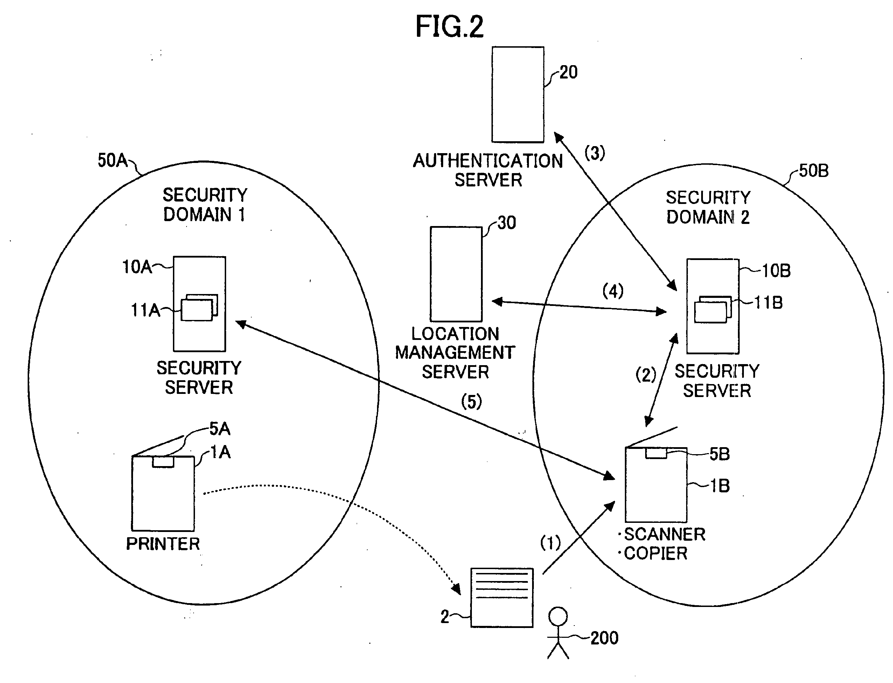

FIG. 2 is a schematic diagram illustrating a document security management system across domains according to the first embodiment of the invention.

In the example shown in FIG. 2, security servers 10A and 10B are placed in security domains 50A and 50B, respectively. The security server 10A has a rule table 11A created based on the security policy of domain 50A. The security server 10B has a rule table 11B created based on the security policy of domain 50B. Information apparatuses 1A and 1B, such as a printer, a scanner, or a copier, are connected to the associated security servers 10A and 10B, respectively An authentication server 10 and a location management server 30 are provided over the security domains 50A and 50B. The authentication server 10 carries out user authentication based on the user attribute, including the name and the position of each user. The location management server 30 manages location information including the protocols and the domain names of the security servers 10A and 10B, under the domain ID of each domain 50.

For example, when the user 200 is trying to make a photocopy of the hardcopy document 2 created in domain 50A, using copier 1B of domain 50B, the security server 10B of domain 50B asks the security server 10A of domain 50B for determination of permissibility of the copy job. With this arrangement the security of a document used across domains 50 can be managed and maintained.

The authentication server 20 manages users operating the information apparatus 1 in each of the domains 50A and 50B, in an integrated fashion. The location server 30 manages the location information of each of the security servers 10A and 10B in an integrated fashion. If the security server 10B of the second domain 50B needs information about permissibility of the requested job, the security server 10B accesses the security server 10A of the first domain in which the document of the target job is created, based on the location information obtained from the location management server 30, and asks for determination of job permissibility using an authentication ticket acquired from the authentication server 20.

The printer 1A and the copier 1B are connected to the associated security servers 10A and 10B, respectively, via a network. The security servers 10A and 10B are also connected to the authentication server 20 and the location management server 30, via the network.

Although only two domains are illustrated in FIG. 2 for the purpose of simplification, the authentication server 20 and the location management server 40 may manage three or more domains. Similarly many types of information apparatuses 1 are placed in each of the domains 50A and 50B.

The hardcopy document 2 created in domain 50A is furnished with a domain ID representing the home domain 50A. The information equipment, that is, printer 1A and copier 1B have ID extraction means 5A and 5B, respectively, for extracting the domain ID representing the home domain from the created document. Thus, each of the information apparatuses 1 can determine the domain in which the document to be processed is created, from the extracted domain ID.

The domain ID may be a visible mark, such as a barcode, or an invisible mark, such as a digital watermark.

The first security server 10A manages and maintains the security of documents created in the first domain 50A, based on the first security policy. The printer 1A placed in the first domain 50A is under the security control of the security server 10A

The second security server 10B manages and maintains the security of documents created in the second domain 50B, based on the second security policy. The copier (or the scanner) 1B placed in the second domain 50B is under the security control of the security server 10B.

Each of the security servers 10A and 10B has a security policy table describing the category and the confidentiality.level of each document, in addition to the rule table 11 including a user managing table describing authorization levels of the respective users in conjunction with user security, a document profile managing table describing security attributes of the respective documents, a print profile managing table describing print security attributes of the printing jobs, and a zone managing table describing which systems or apparatuses belong to which zones or sections. Each of the security servers 10A and 10B determines permissibility of the requested job, with reference to each of the tables, based on the document ID read from the document and the user attribute acquired from the client apparatus.

The location management server 30 used in common among domains 50 has a location managing table describing the locations (e.g., URLs) of the security servers 10 in association with the corresponding domain IDs.

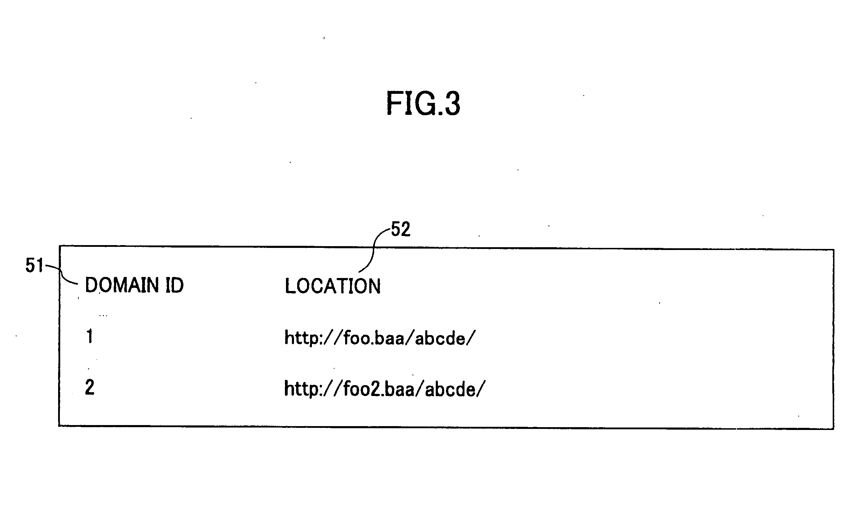

FIG. 3 illustrates an example of the location managing table held in the location management server 30. The location 52, such as the Internet address (URL), of each security server 10 is recorded in the table, in association with the domain ID 51 representing the domain security-controlled by that security server 10. The domain ID of the first security server 10A is "1", with location 52 of "http://foo.baa.abcde/". "http://" denotes the protocol, "foo.baa" indicates the domain name, and "/abcde" represents the directory in the host. The domain ID of the second security server 10BA is "2", with location 52 of "http://foo2.baa.abcde/".

The location management server 30 newly records the domain name and the location of the security server in the location managing table, deletes such information from the table, or changes the location in the table. Although in the first embodiment each of the security servers 10 accesses the location management server 30, each client apparatus (printer or copier) may accesses the location management server 30.

Returning to FIG. 2, the authentication server 20 manages user attribute information including user names and positions. Upon inquiry, the authentication server 20 authenticates the user, and issues a user ticket for the authenticated user.

To be more precise, the authentication server has a user management table describing the attributes of users of the information equipment (printer 1A and copier 1B in FIG. 2) placed in the respective domains Upon inquiry about a user from a security server 10, the authentication server 20 performs user authentication,.with reference to the user management table.

Each of the security servers 10A and 10B determines permissibility of reproduction of documents created in the corresponding domain, based on the document IDs given to the respective documents created in that domain.

For example, when the user 200 inputs a copy request in the copy machine 1B (the arrow (1)), the copy machine 1B queries the security server 10B for the attribute of the user 200 (the arrow (2)). The security server 10B queries the authentication server 20 for the user authentication, and acquires a user ticket (the arrow (3)), which ticket is then supplied to the copy machine 1B (the arrow (2)). The copy machine 1B scans the print (hardcopy document) 2 and extracts the domain ID, which is also supplied to the security server 10B (the arrow (2)). If the source of the print 2 is a different domain, the copy machine 1B queries the location management server 30, via the security server 10B, for the home location of the print 2 (the arrow (4)). Then, the copy machine 1B accesses the security server 10A that controls the printed document 2, using the user ticket and the location information, to query for permissibility of the copy job, and executes or does not execute the copy job according to the instruction from the security server 10A (the arrow (5)).

In this manner, document security can be maintained even if documents are reproduced across domains.

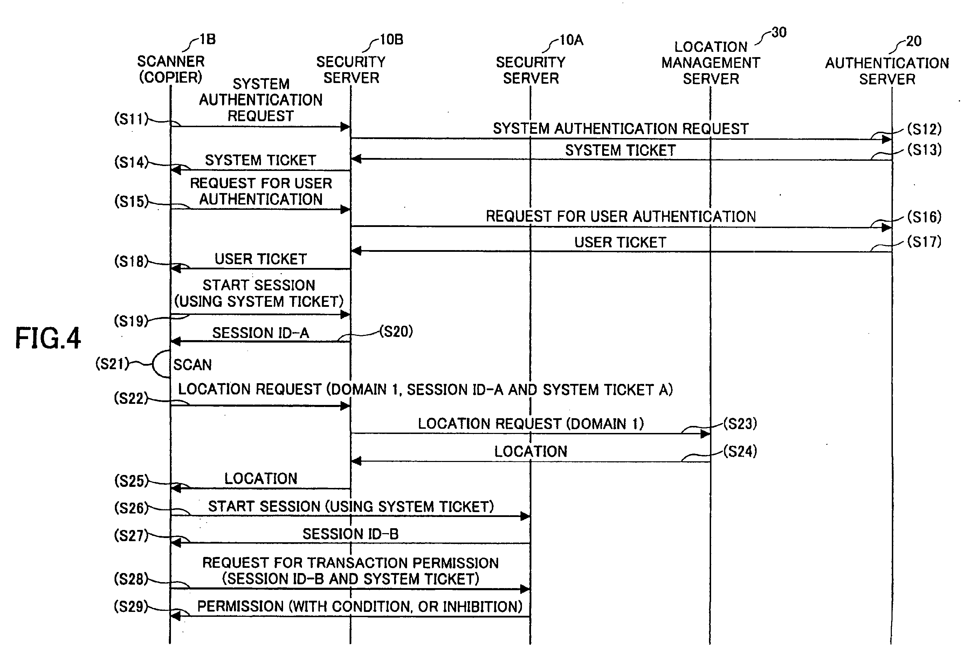

FIG. 4 is a sequence diagram of the document security management according to the first embodiment of the invention. The operations are carried out among scanner/copier 1B, the security server 10B of domain 50B, the security server 10A of domain 50A, the location management server 30, and the authentication server 20. It is assumed that a print (hardcopy document) 2 output from the printer 1A of domain 50A is to be scanned or photocopied by the scanner or the copier 1B belonging to domain 50B. It is also assumed that the print 2 bears the document ID "1" representing the domain 50A.

When the user 200 inputs a job request, the scanner/copier 1B transmits an authentication request for accessing the system to the security server 10B (S11). The security server 10B forwards the authentication request to the authentication server 20 commonly used among domains 50 (S12).

Upon authentication of the scanner/copier 1B, the authentication server 20 issues a system ticket to the security server 10B (S13), which ticket is transmitted from the security server 10B to the scanner/copier 1B (S14).

The system ticket may not necessarily be issued every time a job request occurs, and instead, it may be issued when the scanner/copier 1B is activated, or when the system ticket has expired.

Then, the scanner/copier 1B transmits a request for user authentication to the security server 10B (S15). The security server 10B asks the authentication server 20 for the user authentication (S16).

The authentication server 20 performs user authentication, with reference to the user management table, and issues a user ticket to the scanner/copier 1B, via the security server 10B, if the user attribute is described in the table (S17 and S18).

Then, the scanner/copier 1B transmits a session start request to the security server 10B, using the system ticket (S19). The security server 10B supplies a session ID-A to the scanner/copier 1B (S20).

The scanner/copier 1B extracts the domain ID from the currently processed hardcopy document 2 (S21), and queries the security server 10B for the location of the domain 50A in which the print 2 is created and managed, using the extracted domain ID, the session ID-A, and the system ticket (S22).

The security server 10B forwards the location request to the location management server 30 (S23), and receives the location information of the security server 10A that controls the hardcopy document 2 (S24).

The security server 10B forwards the location information to the scanner/copier 1B (S25). The scanner/copier 1B transmits a session start request to the security server 10A, using the system ticket, based on the location information (S26). The security server 10A returns a session ID-B to the scanner/copier 1B (S27). The scanner/copier 1B asks the security server 10A for permission of the copy job requested by the user 200, using the session ID-B and the user ticket (S28).

The security server 10A determines whether the copy job for the hardcopy document 2 is permissible, referring to the rule table, and transmits the determination result to the scanner/copier 1B (S29). If permissible, the security server 10A transmits permission, with condition(s) if any described in the rule table. If not permissible, the security server 10A transmits permission denied. The scanner/copier 1B processes the copy request according to the instruction from the security sever 10A.

In this manner, even with a job request across domains, user authentication can be correctly performed at the commonly used authentication server 20, and a user ticket is issued. In addition, the source (or the home domain) of the document to be processed can be confirmed by the commonly used location management server 30. The permissibility of a job request for processing a document is determined by the security server of the source domain (or the home domain) of that document, when the user ticket is correctly presented. Thus, the document can be utilized and processed over domains, while maintaining the consistency of the security policy of each domain, and in addition, unauthorized access to each of the security servers can be effectively prevented.

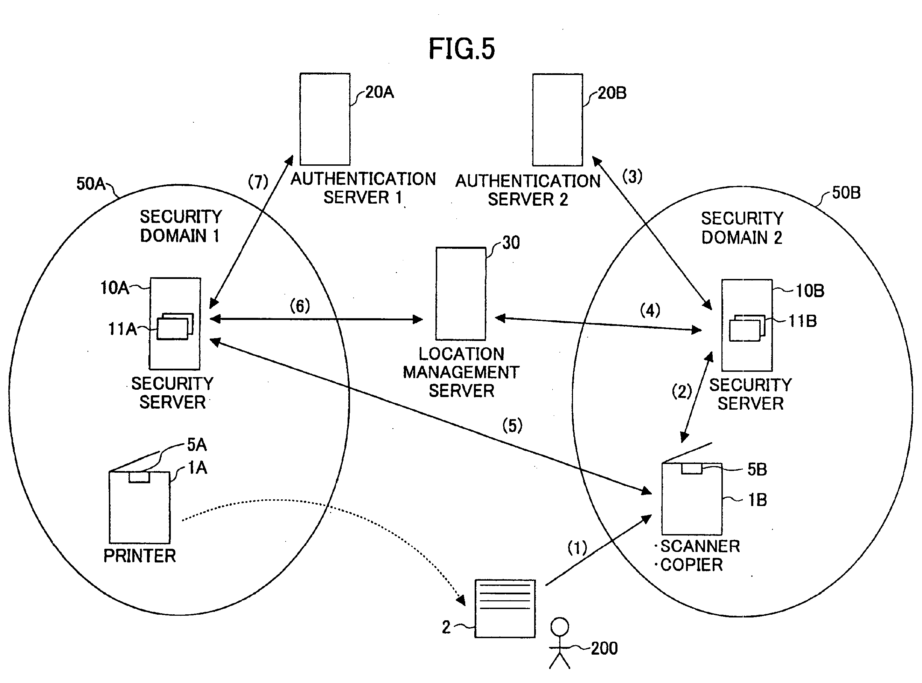

FIG. 5 is a schematic diagram illustrating a document security management system according to the second embodiment of the invention. In the second embodiment, an authentication server is provided to each of the multiple domains, and performs user authentication using an independent authentication scheme. To this end, user attribute information has to be supplied to the security server of another domain when permissibility of the requested job is inquired about to that security server. Accordingly, an operations panel displaying a dialog box is providing to the information equipment (scanner/copier 1B) to allow the user to input the user attribute information. The other structures and functions of the system are similar to those of the first embodiment, and the same components as those shown in the first embodiment are denoted by the same numerical references.

In FIG. 5, the authentication server 20A administers attribute information (including names and positions) of users who operate the information. equipment managed in domain 50A, and authenticates each user upon request. Similarly, the authentication server 20B administers attribute information (including names and positions) of users who operate the information equipment managed in domain 50B, and authenticates each user upon request.

When the user 200 inputs a copy request in the copy machine 1B (the arrow (1)), the copy machine 1B queries the security server 10B for the attribute of the user 200 (the arrow (2)). The security server 10B queries the authentication server 20B for the user authentication, and acquires a user ticket B (the arrow (3)), which ticket B is then supplied to the copy machine 1B (the arrow (2)). The copy machine 1B extracts the domain ID, which represents a different domain in this case, and transmits the extracted ID to the security server 10B (the arrow (2)). The security server 10B queries the location management server 30 for the home location of the printed document 2 (the arrow (4)), and supplies the location information to the copier 1B. Then, the copier 1B accesses the security server 10A that controls the printed document 2, using the user ticket B and the location information, to inquire about permissibility of the copy job (the arrow (5)). In this case, the security server 10A asks the location management server 30 for the location information of security server 10B of domain 50B (the arrow (6)). The security server 10A also asks the authentication server 20A for user authentication and issuance of user ticket A (the arrow (7). The user ticket A is supplied to the copier 1B. The copier 1B asks the security server 10A for permission of execution of the copy job using the user ticket A, and executes or does not execute the requested job according to the instruction from the security server 10A.

In this manner, user authentication is performed for each domain, and document security is maintained across domains even if a job request is generated for a document under control of another domain.

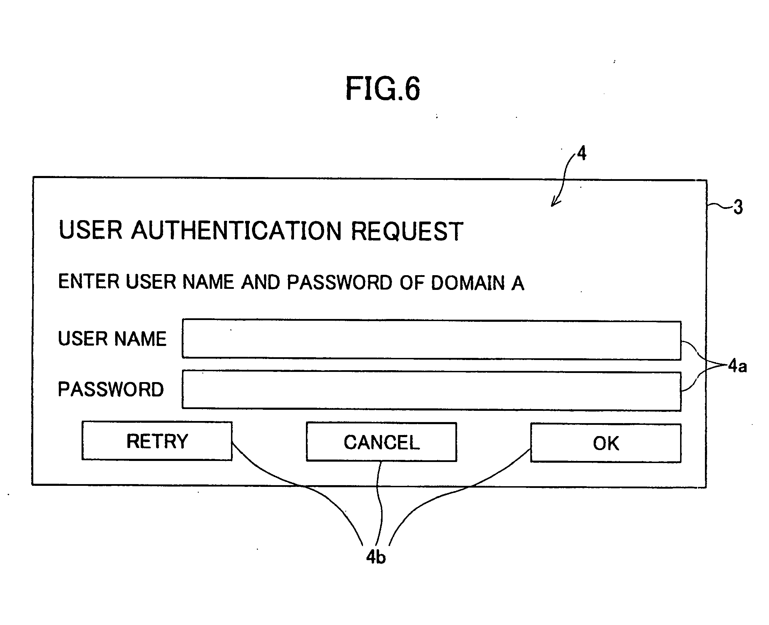

FIG. 6 is a schematic diagram of an operations panel provided to information equipment, such as a scanner, printer, or a copier, placed in each domain 50.

In the second embodiment, the security server 10A that control the hardcopy document 2 requests the copier 1B of another domain 50B to present a user ticket A authenticated by the appropriate authentication server 20. Upon the request from the security server 10A, the copier 1B displays a dialog box 4 in the operations panel 3 so as to allow the user 200 to input necessary information required for authentication in domain 50A.

The dialog box 4 includes frames 4a for inputting the user name and the password, and selection keys 4b for choice of "retry", "cancel", and "OK". It is not necessary to use the domain name as the user name, but a user name that can be authenticated by "Windows (registered trademark of Microsoft)" or a user name of "Notes (registered trademark of Lotus Development Corporation" may be used. Instead of the dialog box, the user attribute can be input using an IC card.

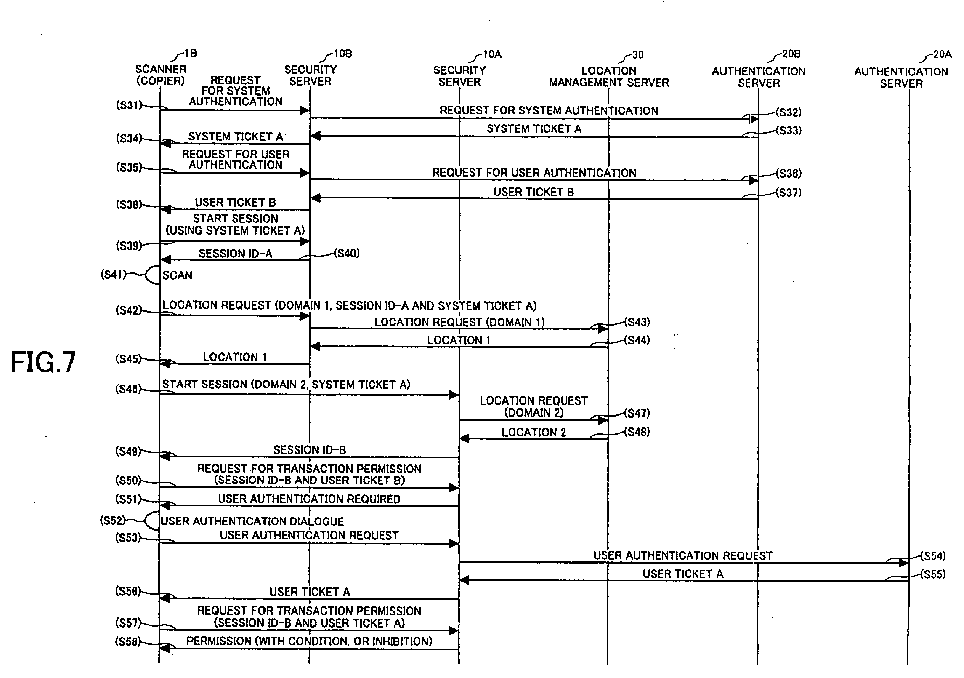

FIG. 7 is a sequence diagram of the document security management according to the second embodiment of the invention. The operations are carried out among scanner/copier 1B, the security server 10B of domain 50B, the security server 10A of domain 50A, the location management server 30, authentication server 20B, and the authentication server 20A. It is assumed that a print (hardcopy document) 2 output from the printer 1A of domain 50A is to be scanned or photocopied by the scanner or the copier 1B belonging to domain 50B. It is also assumed that the print 2 bears the document ID "1" representing the domain 50A.

When the user 200 inputs a job request, the scanner/copier 1B transmits an authentication request for accessing the system to the security server 10B (S31). The security server 10B forwards the authentication request to the associated authentication server 20B for domain 50B (S32).

Upon authentication of the scanner/copier 1B, the authentication server 20B issues a system ticket A to the security server 10B (S33), which ticket A is transmitted form the security server 10B to the scanner/copier 1B (S34).

The system ticket may not necessarily be issued every time a job request occurs, and instead, it may be issued when the scanner/copier 1B is activated, or when the system ticket has expired.

Then, the scanner/copier 1B transmits a request for user authentication to the security server 10B (S35). The security server 10B asks the authentication server 20B for the user authentication (S36).

The authentication server 20B performs user authentication, with reference to the user management table, and issues a user ticket B to the scanner/copier 1B, via the security server 10B, if the user attribute is described in the table (S37 and S38).

Then, the scanner/copier 1B transmits a session start request to the security server 10B, using the system ticket (S39). The security server 10B supplies a session ID-A to the scanner/copier 1B (S40).

The scanner/copier 1B extracts the domain ID from the currently processed hardcopy document 2 (S41), and queries the security server 10B for the location of the domain 50A in which the print 2 is created and managed, using the extracted domain ID, the session ID-A, and the system ticket A (S42).

The security server 10B forwards the location request to the location management server 30 (S43), and receives the location information of the security server 10A that controls the hardcopy document 2 (S44). The security server 10B forwards the location information to the scanner/copier 1B (S45).

The scanner/copier 1B transmits a session start request to the security server 10A, using the system ticket A, based on the location information (S46). The security server 10A transmits a location request to the location management server 30 asking for location information about the security server 10B (S47), and acquires the location information (S48).

The security server 10B returns a session ID-B to the scanner/copier 1B (S49). The scanner/copier 1B asks the security server 10A for permission of the copy job, using the session ID-B and the user ticket B (S50). Since the user 200 has not been authenticated yet in domain 50A, the security server 10A requests the scanner/copier 1B to conduct user authentication (S51). The scanner/copier 1B displays the user dialog in the operations panel (S52).

The user inputs necessary information through the operations panel, and transmits an authentication request to the security server 10A (S53). The security server 10A forwards the authentication request to the associated authentication server 20A (S54), and acquires a user ticket A (S55). The user ticket A is supplied to the scanner/copier 1B (S56).

The scanner/copier 1B asks the security server 10A for permission to perform the copy job, using the user ticket A and the session ID-B (S57). The security server 10A determines the permissibility of the job execution, referring to the rule table 11A, and transmits the determination result to the scanner/copier 1B (S58).

The scanner/copier executes (with conditions if any) or does not execute the requested job, according to the instruction from the security server 10A.

In this manner, in the second embodiment, security of a document can be maintained across multiple domains using independent user authentication schemes, while preventing unauthorized access to the security servers, even if the document under security control of a certain domain is to be processed (or reproduced) in another domain.

The locations of the security servers are managed by a commonly used location management server in an integrated manner.

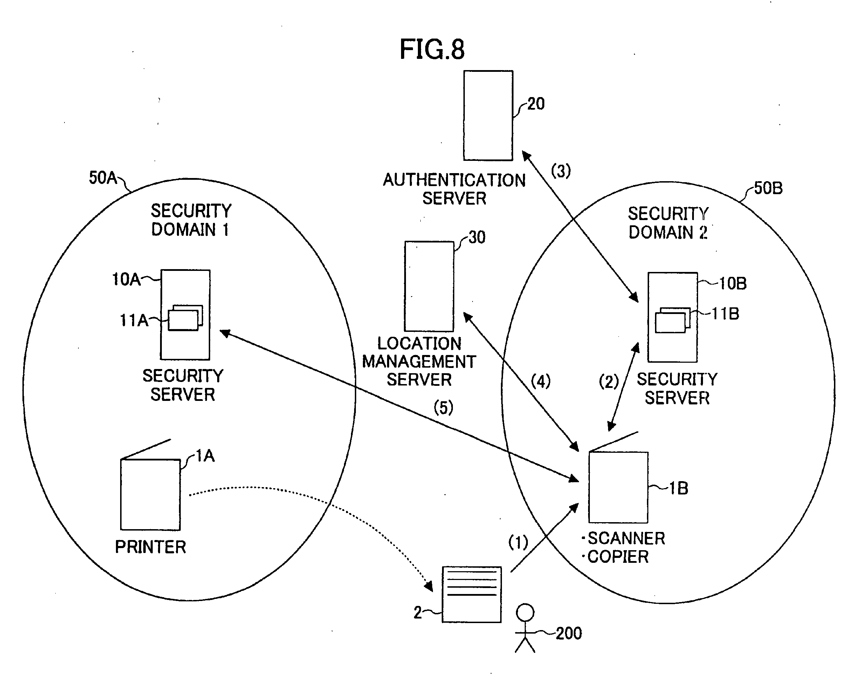

FIG. 8 is a schematic diagram of a document security management system according to the third embodiment of the invention. In the third embodiment, each of the information apparatus transmits an inquiry about the location or the home domain of the extracted document ID directly to the location management server 30, as indicated by the arrow (4). The other structures and the functions of the system are similar to those of the first embodiment, and the same components as those of the first embodiment are denoted by the same numerical references.

In domain 50A, a security server 10A with a rule table 11A and a printer 1A are arranged. The security server 10A controls and maintains the security of documents created in domain 50A, according to the first security policy. The printer 1A is under security control of the security server 10A.

In domain 50B, a security sever 10B with a rule table 11B and a scanner/copier 1B are arranged. The security server 10B controls and maintains the security of documents created in domain 50B, according to the first security policy. The scanner/copier 1B is under security control of the security server 10B.

A location management server 30 and an authentication server 20 are commonly used in the first and second domains 50A and 50B. The location management server 30 has a table describing the security servers 10A and 10B (in the example of FIG. 8) in association with the locations, such as URLs. The authentication server 20 authenticates a user upon request, based on the user attribute information stored in a user management table (not shown).

Each of the information apparatus 1 knows the location of the location management server 30 in advance. If the domain ID extracted from the hardcopy document to be processed differs from the domain ID of the information apparatus, then the information apparatus inquires of the location of the security server that controls the currently processed hardcopy document directly to the location management server 30. This arrangement simplifies the procedure.

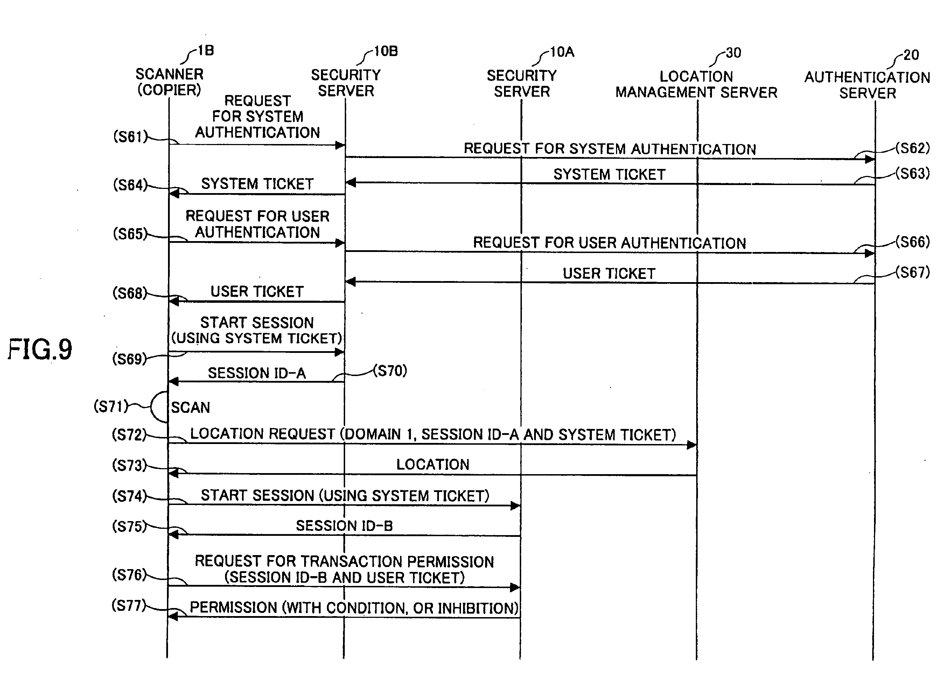

FIG. 9 is a sequence diagram of the document security management according to the third embodiment of the invention. The operations are carried out among the scanner/copier 1B, the security server 10B, the security server 10A, the location management server 30, and the authentication server 20. It is assumed that a print (hardcopy document) 2 output from the printer 1A of domain 50A is to be scanned or photocopied by the scanner or the copier 1B belonging to domain 50B. It is also assumed that the print 2 bears the document ID "1" representing the domain 50A

When the user 200 inputs a job request, the scanner/copier 1B transmits an authentication request for accessing the system to the security server 10B (S61). The security server 10B forwards the authentication request to the authentication server 20 commonly used among domains 50 (S62).

Upon authentication of the scanner/copier 1B, the authentication server 20 issues a system ticket to the security server 10B (S63), which ticket is transmitted from the security server 10B to the scanner/copier 1B (S64).

The system ticket may not necessarily be issued every time a job request occurs, and instead, it may be issued when the scanner/copier 1B is activated, or when the system ticket has expired.

Then, the scanner/copier 1B transmits a request for user authentication to the security server 10B (S65). The security server 10B asks the authentication server 20 for the user authentication (S66).

The authentication server 20 performs user authentication, with reference to the user management table, and issues a user ticket to the scanner/copier 1B, via the security server 10B, if the user attribute is described in the table (S67 and S68).

Then, the scanner/copier 1B transmits a session start request to the security server 10B, using the system ticket (S69). The security server 10B supplies a session ID-A to the scanner/copier 1B (S70).

The scanner/copier 1B extracts the domain ID from the currently processed hardcopy document (S71). Using the extracted domain ID, the acquired session ID-A, and the system ticket, the scanner/copier 1B queries the location management server 30 for the location of the domain 50A in which the print 2 is controlled (S72). The location management server 30 supplies the location information of the security server 10A to the scanner/copier 1B (S73).

The scanner/copier 1B transmits a session start request to the security server 10A, using the system ticket, based on the acquired location information (S74). The security server 10A returns a session ID-B to the scanner/copier 1B (S75). The scanner/copier 1B asks the security server 10A for permission to perform the copy job requested by the user 200, using the session ID-B and the user ticket (S76).

The security server 10A determines whether the copy job for the hardcopy document 2 is permissible, referring to the rule table, and transmits the determination result to the scanner/copier 1B (S77). If permissible, the security server 10A transmits permission, with condition(s) if any described in the rule table. If not permissible, the security server 10A transmits permission denied. The scanner/copier 1B processes the copy request according to the instruction from the security sever 10A.

In this manner, security of a document can be maintained across multiple domains, while preventing unauthorized access to the security servers, under the situation where direct access from each of the information apparatuses to the location management server 30 is allowed.

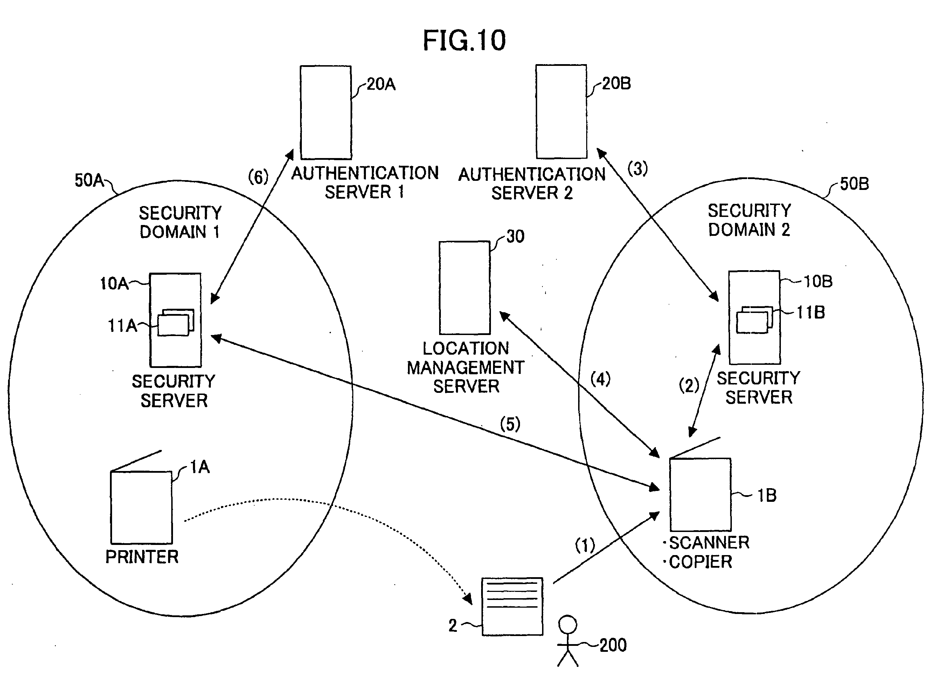

FIG. 10 is a schematic diagram illustrating a document security management system according to the fourth embodiment of the invention. The fourth embodiment is similar to the second embodiment, except for direct access to the location management server from each of the information apparatuses placed in the respective domains.

A first security server 10A is provided in the first domain 50A, and a second security server 10B is provided in the second domain 50B.

A location management server 30 is used commonly among the multiple domains (only two domains 50A and 50B are illustrated in the example shown in FIG. 10). The location management server 30 has a table describing the domain IDs and the locations of the respective domains controlled by the associated security servers 10. Each of the information apparatuses 1A and 1B directly accesses the location management server 30 to inquire about the location of a security server that controls a currently processed document, based on the domain ID extracted from the document.

A first authentication server 20A is provided for the first domain 50A to authenticate users under domain 50A using the user attributes information, including the user names and positions. Similarly, a second authentication server 20B is provided for the second domain 50B to authenticate users under domain 50B using the user attributes information.

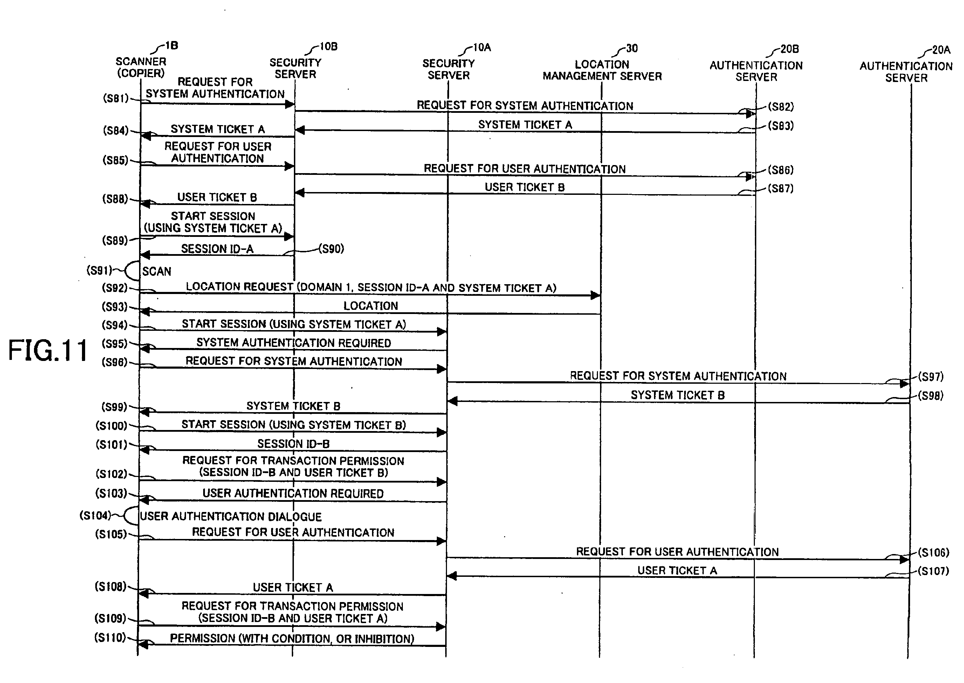

FIG. 11 is a sequence diagram of the document security management carried out according to the fourth embodiment of the invention. The operations are carried out among scanner/copier 1B, the security server 10B of domain 50B, the security server 10A of domain 50A, the location management server 30, authentication server 20B, and the authentication server 20A. It is assumed that a print (hardcopy document) 2 output from the printer 1A of domain 50A is to be scanned or photocopied by the scanner or the copier 1B belonging to domain 50B. It is also assumed that the print 2 bears the document ID "1" representing the domain 50A.

When the user 200 inputs a job request, the scanner/copier 1B transmits an authentication request for accessing the system to the security server 10B (S81). The security server 10B forwards the authentication request to the associated authentication server 20B for domain 50B (S82).

Upon authentication of the scanner/copier 1B, the authentication server 20B issues a system ticket A to the security server 10B (S83), which ticket A is transmitted from the security server 10B to the scanner/copier 1B (S84).

The system ticket may not necessarily be issued every time a job request occurs, and instead, it may be issued when the scanner/copier 1B is activated, or when the system ticket has expired.

Then, the scanner/copier 1B transmits a request for user authentication to the security server 10B (S85). The security server 10B asks the authentication server 20B for the user authentication (S86).

The authentication server 20B performs user authentication, with reference to the user management table, and issues a user ticket B to the scanner/copier 1B, via the security server 10B, if the user attribute is described in the table (S87 and S88).

Then, the scanner/copier 1B transmits a session start request to the security server 10B, using the system ticket (S89). The security server 10B supplies a session ID-A to the scanner/copier 1B (S90).

The scanner/copier 1B extracts the domain ID from the currently processed hardcopy document 2 (S91), and queries the location management server 30 for the location of the security server 10A that manages the print 2, using the extracted domain ID, the session ID-A, and the system ticket A (S92). The location management server 30 supplies the location information to the scanner/copier 1B (S93).

The scanner/copier 1B transmits a session start request to the security server 10A, using the system ticket A, based on the location information (S94). The security server 10A requests the scanner/copier 1B to conduct system authentication (S95). Then, the scanner/copier asks the authentication server 20A, via the security server 10A, for system authentication (S96 and S97). The authentication server 20A issues a system ticket B, which thicket B is supplied via the security server 10A to the scanner/copier 1B (S98 and S99).

The scanner/copier 1B transmits a session start request to the security server 10A, using the system ticket B (S100). The security server 10A supplies a session ID-B to the scanner/copier 1B (S101).

The scanner/copier 1B asks the security server 10A for permission to perform the copy job, using the session ID-B and the user ticket B (S102). The security server 10A requests the scanner/copier 1B to conduct user authentication (S103). The scanner/copier 1B displays the user dialog in the operations panel (S104).

The user 200 inputs necessary information through the operations panel, and transmits an authentication request to the security server 10A (S105). The security server 10A forwards the authentication request to the associated authentication server 20A (S106), and acquires a user ticket A (S107). The user ticket A is supplied to the scanner/copier 1B (S108).

The scanner/copier 1B asks the security server 10A for permission to perform the copy job, using the user ticket A and the session ID-B (S109). The security server 10A determines the permissibility of the job execution, referring to the rule table 11A, and transmits the determination result to the scanner/copier 1B (S110).

The scanner/copier 1B executes or does not execute the requested job according to the instruction from the security server 10A.

Since each of the information apparatuses 1A and 1B directly accesses the location management server 30, the procedure can be simplified, as in the third embodiment.

When the commonly used location management server changes its location, it broadcasts the changed location to all of the information apparatpuses 1 included in the system under the direct access configuration in the third and the fourth embodiments

The location of the location management server 30 is broadcast every time the location management server 30 is established or changes its location. Alternatively, each of the information apparatus 1 may transmit or broadcast a location request every time it is powered on, in order to acquire the current location of the location management server 30 With only the former arrangement, the information apparatus cannot receive the location of the location management server if it is powered off. With only the latter arrangement, the information appapratus cannot receive the updated location in real time. Accordingly, it is desired to combine the former and the latter arrangements.

In this manner, in the first through fourth embodiment, document security can be maintained across multiple domains using different security policies.

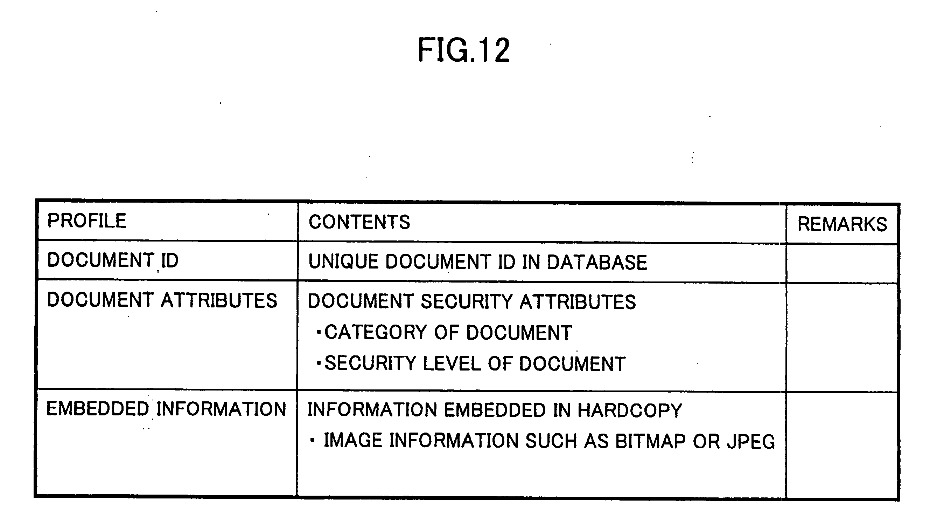

Next, the fifth embodiment of the present invention is described with reference to FIG. 12 through FIG. 20. Even with the document security management system described in the first through fourth embodiments of the invention, there may still be a possibility of unauthorized diversion of a document under security control. Accordingly, in the fifth embodiment, the system is configured to trace a sequence of unauthorized reproductions (printing, photocopying, scanning, and other image reproductions) of the security-controlled document.

FIG. 12 illustrates an example of a profile table held in the conventional security server. The profile table records a document attribute file describing the security attribute of a document, as well as embedded information which is to be embedded in and output together with image data during a printing operation, in association with the unique ID of that document. The document security attribute includes, for example, the category and the security level of the document. The embedded information includes a bitmap format and JPEG scheme for creating a print ID during the printing operation.

However, it is difficult for the security server with this profile table to trace back the sequence of document reproductions.

In the fifth embodiment, to allow the system to trace back the reproduction history, a security server is configured to have a print profile table for recording a sequence of source IDs for each of hardcopy documents (physical documents), and a document profile table for recording a sequence of source IDs for each of electronic documents. The sequence of the source IDs are arranged in descending order or ascending order in each table, and the document ID of the currently processed document is added as a new source ID to the table every time a new document (both hardcopy and electronic data) is created or reproduced from the currently processed document.

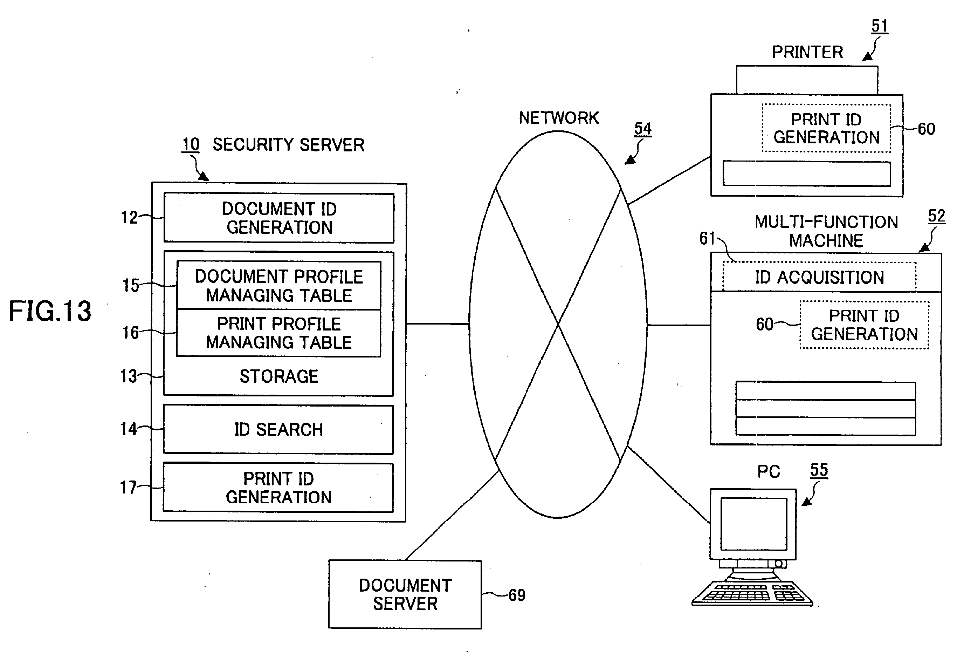

FIG. 13 is a schematic diagram of a document security management system according to the fifth embodiment of the invention. The system includes a security server 10, a document server 69, and information equipment including a printer 51, a multi-function image forming/reproducing apparatus (hereinafter referred to simply as "multi-function machine") 52 and a personal computer 55, which are connected to each other via a network 54. The personal computer 55 creates an electronic document containing text and pictures.

The security server 10 controls those documents created, reproduced, or transmitted within the domain (not shown). The security server 10 manages information about electronic documents and information about hardcopy documents (or prints) separately. To this end, the security server 10 has a document profile managing table 15 for managing electronic documents, and a print profile managing table 16 for managing hardcopy documents (physical documents).

In the system shown in FIG. 13, an electronic document created by the personal computer 55 is output from the printer 51 or the multi-function machine 52. The multi-function machine 52 is furnished with multiple types of image forming/reproducing applications, such as a printer application, a copier application, a scanner application, and a facsimile application. When functioning as a printer, it receives electronic data from the personal computer 5 or other machines (not shown) and outputs a print bearing a reproduced image of the electronic data. When functioning as a copier, it reads image data from printed material, such as a sheet of text or photograph, and reproduces the pixel data on paper. When functioning as a scanner or a facsimile transmission machine, it reads image data from an original text and transmits the image data to a designated address.

The printer 51 has a print ID generation unit 60, which generating a print ID for each print job. The print ID is an arbitrary form of identifier represented by figures, symbols, codes, barcodes, or QR codes. In this embodiment, a QR code (two-dimensional barcode) is used as the print ID. The QR code is formed by, for example, a dot pattern consisting of a set of small dots. Such a print ID is printed, together with the image data, on paper.

When the multi-function machine 52 functions as a printer, a photocopier, or a facsimile receiving machine, it generates and gives a print ID for each job of reproducing electronic data on paper, like the printer 51. When the multi-function machine 52 functions as a scanner or a facsimile transmission machine, it reads the print ID from the original copy Accordingly, the multi-function machine 52 has a print ID generation unit 60 and a ID extraction unit 61.

In this embodiment, the printer 51 and the multi-function machine 52 are of an electrophotographic type, but the invention is not limited to this example. The print ID does not necessarily have to be produced at the image forming/reproducing end (i.e., at the printer 51 or the multi-function machine 52), but can be generated by the security server 10 or the client application of the personal computer 55. Although only two image forming/reproducing apparatuses 51 and 52 are depicted in FIG. 13 for the purpose of simplification, many other types of information equipment can be connected to the network 54.

The security server 10 has a document ID generation unit 12, a storage unit 13, an ID searching unit 14, and a print ID generation unit 17. The above-described document profile managing table 15 and the print profile managing table 16 are stored in the storage unit 13, and manage the electronic documents and the hardcopy documents independently. In this context, hardcopy documents are physical documents reproduced on media, such as paper, through printer jobs, copy jobs, facsimile receiving jobs, or other image reproducing jobs.

The document ID generation unit 12 generates and gives a document ID every time the personal computer 55 or the multi-function machine 52 creates an electronic document. The storage unit 13 receives and stores information supplied from the printer 1, the multi-function machine 2, or the personal computer 5, and it writes necessary information in the document profile managing table 15 or the print profile managing table 16, as required. The ID searching unit 14 searches in the document profile managing table 15 or the print profile managing table 16 for a target document ID or print ID. The print ID generation unit 17 is not an essential element of the security server 10, and it issues a print ID, in place of the image forming/reproducing apparatus (printer 1 of multi-function machine 2), when a print job or a copy job is executed.

The storage unit 13 also stores a rule table created according to a security policy, although not shown in FIG. 13. The rule table describes a set of rules, which rules are referred to when determining permissibility of access (including read requests or editing requests) to the document under security control in the domain. For example, the rule table defines which level of user can be permitted to access which security level of document. Although not shown in FIG. 13, the storage unit 13 may also have a user database for recording user information including user names, positions, or access levels.

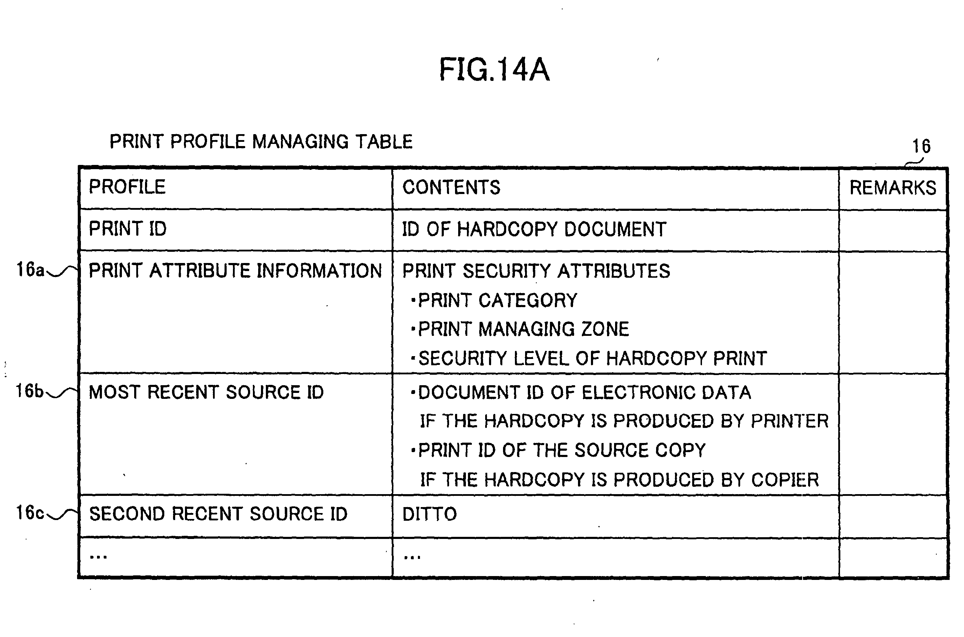

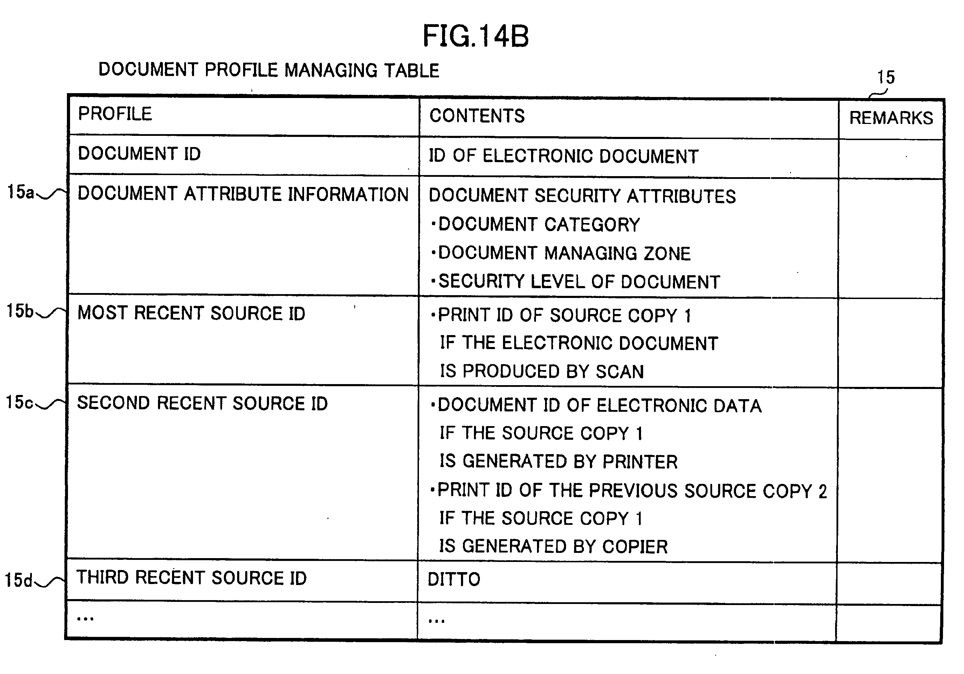

FIG. 14A illustrates an example of the print profile managing table 16, and FIG. 14B illustrates an example of the document profile managing table 15.

The print profile managing table 16 stores print profiles. Each of the print profiles is in association with a unique print ID given to a print job outputting a hardcopy documents, and with a sequence of source IDs so as to indicate through what path the hardcopy document defined by the print ID is reproduced. Print attribute information 16a is also associated with each of the print profiles. The print attribute information includes print security attributes, such as a print category (confidential documents, technical documents, general documents, etc.), a zone (research centers, places of business, development divisions, etc.) that controls the print, and a print security level (High, Medium, Low, etc.).

The ID of the most recent document (hardcopy document or electronic document) from which the hardcopy document defined by this print profile is reproduced is stored as the source ID 16b. If the hardcopy document is output from the printer 51 or the multi-function machine 52 in response to a request from the personal computer 55, then, the document ID of the electronic data created in the personal computer 55 becomes the most recent source ID 16b. If the hardcopy document is reproduced by photocopy from an original copy, then the print ID printed on the original copy is stored as the most recent source ID 16b.

If there is a further previous source document with respect to the most recent source ID, the most recent source ID is linked with the further previous source ID. In this manner, the source ID is sequentially linked toward the upstream. This arrangement allows a system administrator to trace back the document reproduction history.

Similarly, the document profile managing table 15 stores document profiles. Each of the document profiles is in association with a unique document ID given to an electronic document, and with a sequence of source IDs so as to indicate through what path the electronic document defined by the document ID is reproduced. Document attribute information 15a is also associated with each of the document profiles. The document attribute information includes document security attributes of electronic document, such as a document category (confidential documents, technical documents, general documents, etc.), a zone (research centers, places of business, development divisions, etc.) that controls the electronic document, and a document security level (High, Medium, Low, etc.)

The ID of the most recent document (hardcopy document or electronic document) from which the electronic document defined by this document profile is reproduced is stored as the source ID 15b. If the electronic document is created by the scanner function of the multi-function machine 52, then, the print ID printed on the scanned print (original 1) becomes the most recent source ID 15b.

If there is a further previous source document with respect to the most recent source ID, that ID of the previous source document is recorded as the second recent source ID 15c. For example, if the scanned print (original 1) is output from the printer 51 or the multi-function machine 52 in response to a print request from the PC 55, the ID of the electronic document created by the PC 55 is recorded as the second recent source ID 15c. If the scanned print (original 1) is photocopied from an original copy 2 by the multi-function machine 52, then the print ID of the original copy 2 is recorded as the second recent source ID 15c. In this manner, the source ID is sequentially linked toward the upstream.

In this manner, every time a hardcopy document bearing a reproduced image on it is output, a print ID is given, and this print ID is added to the print profile managing table 16 of the security server 10, together with the sequence of the source IDs.

Similarly, every time an electronic document is created by PC 55 or the multi-function machine 52 (as the scanner), a document ID is given to the electronic document. The document ID is added to the document profile managing table 15, together with the sequence of the source IDs.

Whenever the security server 10 receives an inquiry about a document based on either a print ID or a document ID, the security server 10 can easily trace back the jobs performed so far because the reproduction history is defined in each of the profile tables 15 and 16. Consequently, determination as to the security state of a document can be made accurately.

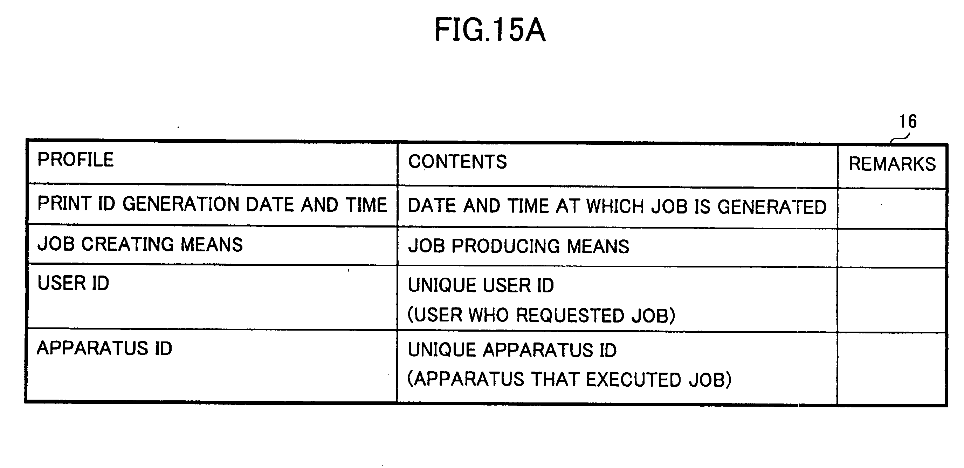

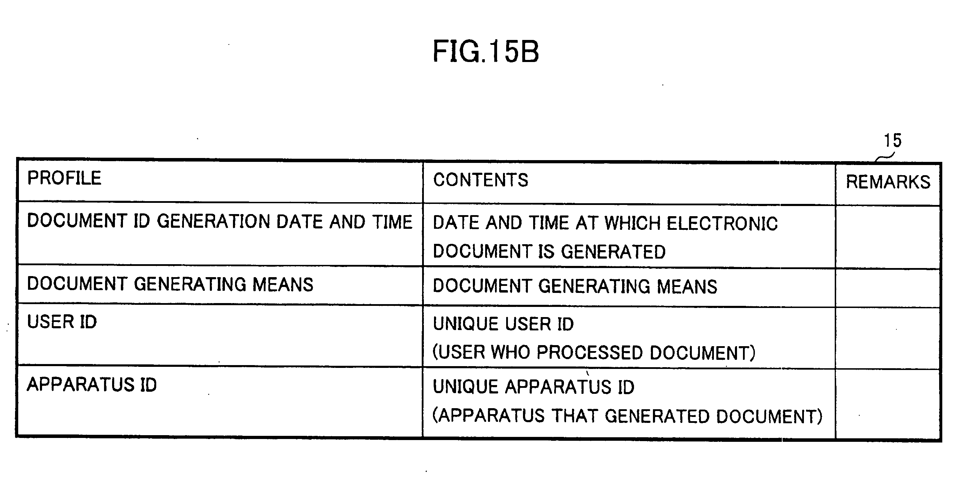

FIG. 15A is an example of detailed information described in the print profile managing table 16, and FIG. 15B is an example of detailed information described in the document profile managing table 15.

As shown in FIG. 15A, the print profile managing table 16 has an entry of print ID generation time representing the data and time at which the job (copy job, print job, etc.) is generated, an entry of job producing means representing the means or function (print means, copy means, etc.) that produces the job an entry of a user ID representing the user that 'requested the job, and an entry of apparatus ID representing the apparatus (information equipment) that executes the job.

Similarly, the document profile managing table 15 has an entry of document ID generation time representing the data and time at which the electronic document is produced, an entry of electronic document producing means representing the means or function (word-processing means, scan means, etc.) that produces the electronic document, an entry of a user ID representing the user who processes the document, and an entry of apparatus ID representing the apparatus (information equipment) that produces the electronic document.

The detailed information helps document tracking because the reproduction history between hardcopy and electronic data is easily grasped.

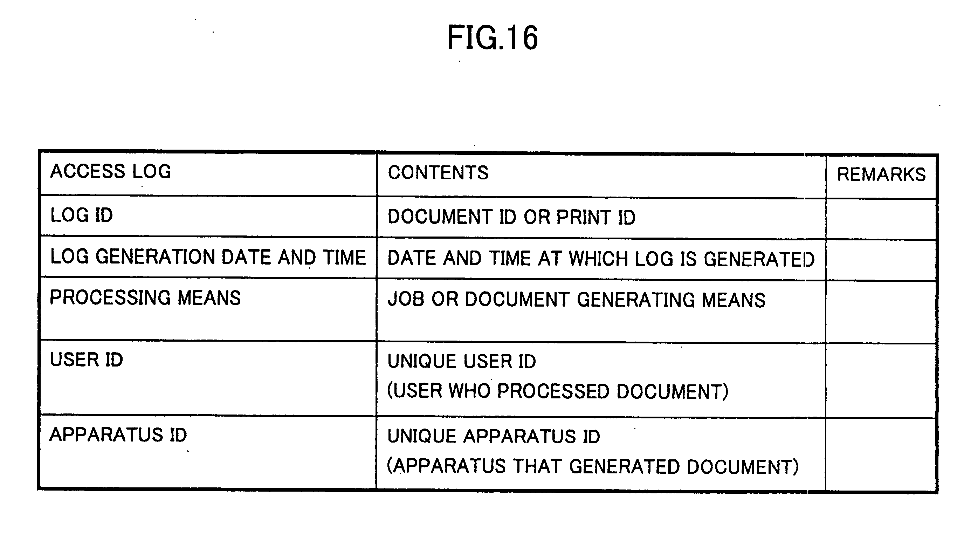

FIG. 16 is an example of access log, which is also recorded in the security server 10. Every time reproduction or creation of a document takes place, an access to the security server 10 from the associated image forming/reproducing apparatus occurs via the network 54, to record job information in the print profile managing table 16 or the document profile managing table 15. By keeping and analyzing the access log, security management and tracking of documents can be performed more effectively. In the example shown in FIG. 16, every time an access to the security server occurs, log information including a log generation time, processing means, a user ID, and an apparatus ID that requested the access, is recorded in association with the log ID (that is, the document ID or the print ID to be added). By combining the access log with the detailed information shown in FIG. 15A and 15B, who reproduced the document from which apparatus using what types of reproducing means can be known, even if the document is misused, by breaking the rule, in the policy-based document security system.

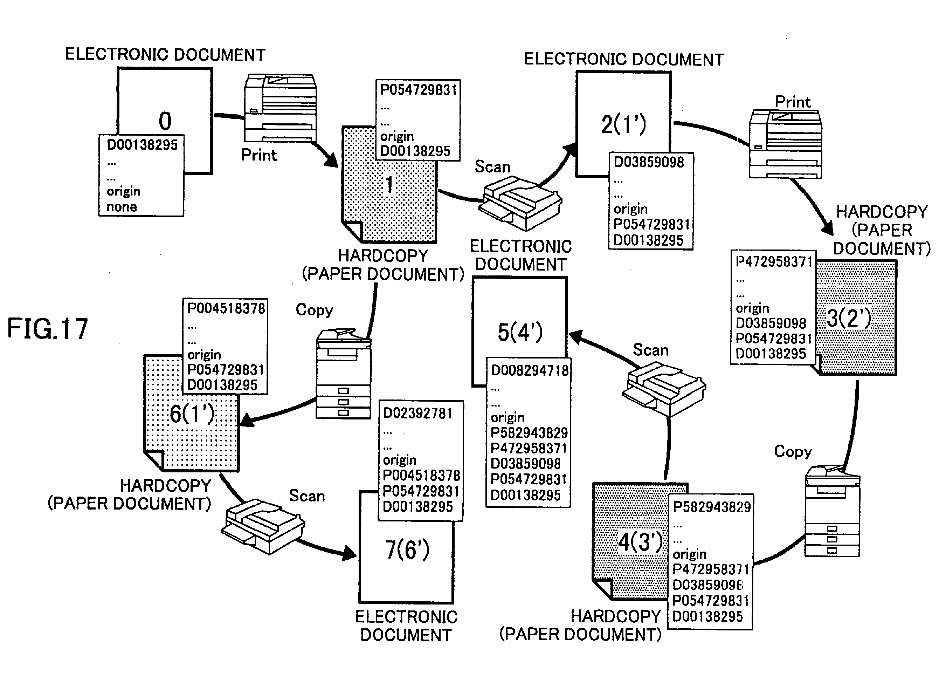

FIG. 17 is a schematic diagram illustrating how the sequence of source IDs recorded in the profile changes along with the repetition of reproduction job For example, an electronic document 0 is created by a word processor, and the document ID (D00138295) is given to the electronic document. When the electronic document is printed from a printer, a print ID (P054729831) is given to the print job, and hardcopy document 1 with this print ID is output. The origin of the hardcopy document 1 is the electronic document 0, and therefore, the document ID of the electronic document 0 is recorded as the most recent source ID in the profile of the hardcopy document 1.

If the hardcopy document 1 is scanned and an electronic document 2 is generated, another document ID is given to the electronic document 2. The origins of the electronic document 2 are hardcopy document 1 and the electronic document 0 in ascending order. If the electronic document 2 is printed out, a new print ID is given and a hardcopy document 3 is generated. On the hardcopy document 3 is printed an ID pattern representing the newly assigned print ID. Subsequently, every time a document reproduction job occurs, a new document ID or a new print ID is given, and the most recent source ID is added.

When an electronic document is created, the document ID and the associated source IDs are recorded in the document profile managing table 15. When a hardcopy document is created, the print ID and the associated source IDs are recorded in the print profile managing table 16. Accordingly, even if different types of document reproduction jobs are repeated, as illustrated in FIG. 17, the document reproduction history can be traced back, and therefore, document security can be maintained.

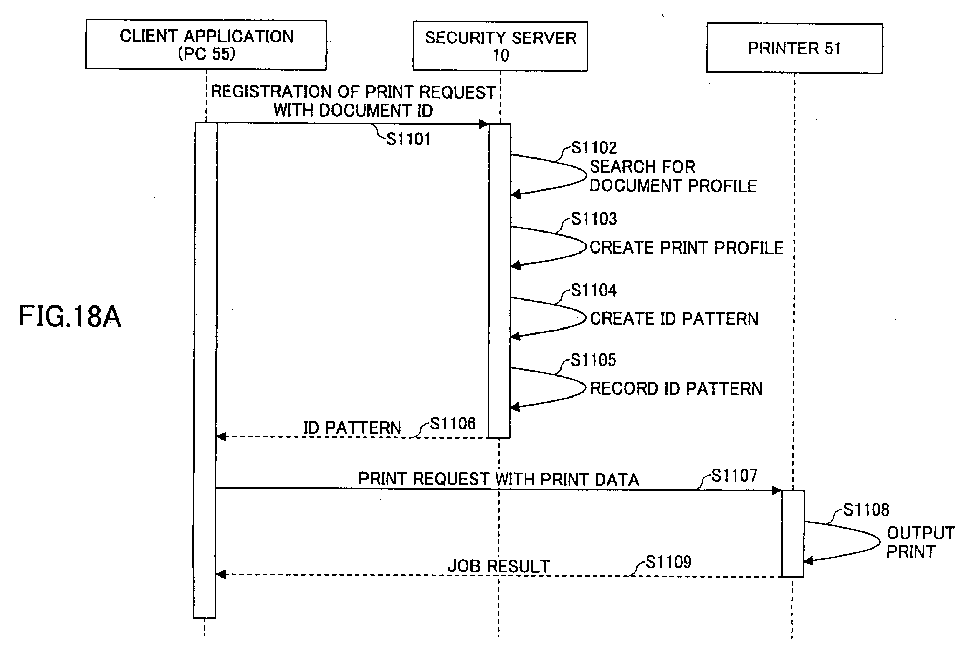

FIG. 18A through FIG. 18C are sequence diagrams of the profile processing process carried out for a print job in the document security management system shown in FIG. 13.

In the sequence shown in FIG. 18A, a print ID pattern (for example, a QR code) is generated at the security server 10. Upon receiving a print request and a document ID from the client application of PC 55 (S1101), the security server 10 searches the document profile corresponding to this document ID in the document profile managing table 15 to check if there is source ID information described in this document profile (S1102). When creating a print profile for the currently requested print job (S1103) the security server 10 adds the source ID information contained in the document profile and the document ID to the newly created print profile (S1103). If there is no source ID described in the corresponding document profile, only the document ID is added as the source ID to the newly created print profile (S1103). Thus, the print profile managing table 16 is updated.

Then, the security server generates a print ID pattern (S1104), and records the created ID pattern in the print profile managing table 16, as necessary (S1105). The print ID pattern is supplied from the security server 10 to the client application of PC 55 (S1106). The client application adds this print ID pattern to the electronic data to be printed, and transmits the data to the printer 51 (S1107). The printer 51 outputs a hardcopy print (S1108), and transmits the job result to the client application (S1109).

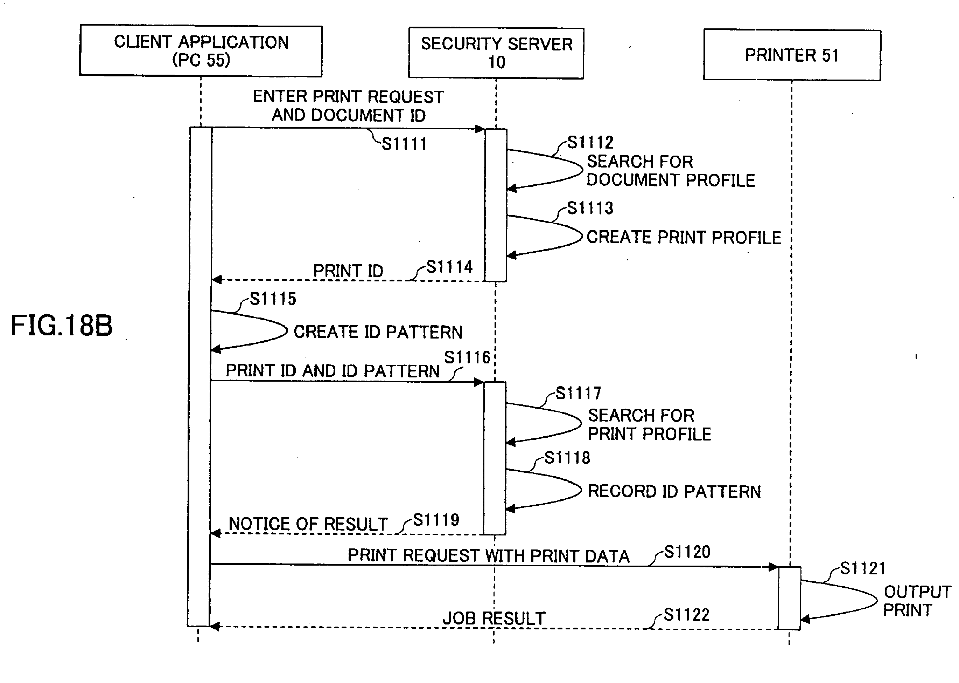

In FIG. 18B, a print ID pattern is generated at the client application. In response to a print request from the client application of PC 55, the security server 3 searches in the document profile managing table 15, creates a print profile to update the print profile managing table 16, while adding the associated source ID information to the newly created print profile (S1111-S1113). The print ID given to the newly created print profile is transmitted from the security server 10 to the client application (S1114). The client application of PC 55 generates an ID pattern representing the print ID (S1115). If the system is designed so as to record the created ID pattern itself in the print profile managing table 16 the ID pattern is transmitted from the client application to the security server 10 (S1116). The security server 10 searches for the corresponding print ID in the print profile managing table 16 (S1117), and enters the ID pattern (S1118). Then, the recording is reported to the client application (S1119).

The client application adds the ID pattern to the electronic data to be printed, and transmits the print data to the printer 51 (S1120). The printer 51 prints out the print data, together with the ID pattern (S1121), and transmits the job result to the client application (S1122). The timing of optionally performed recording of ID pattern (S1118) may be appropriately adjusted.

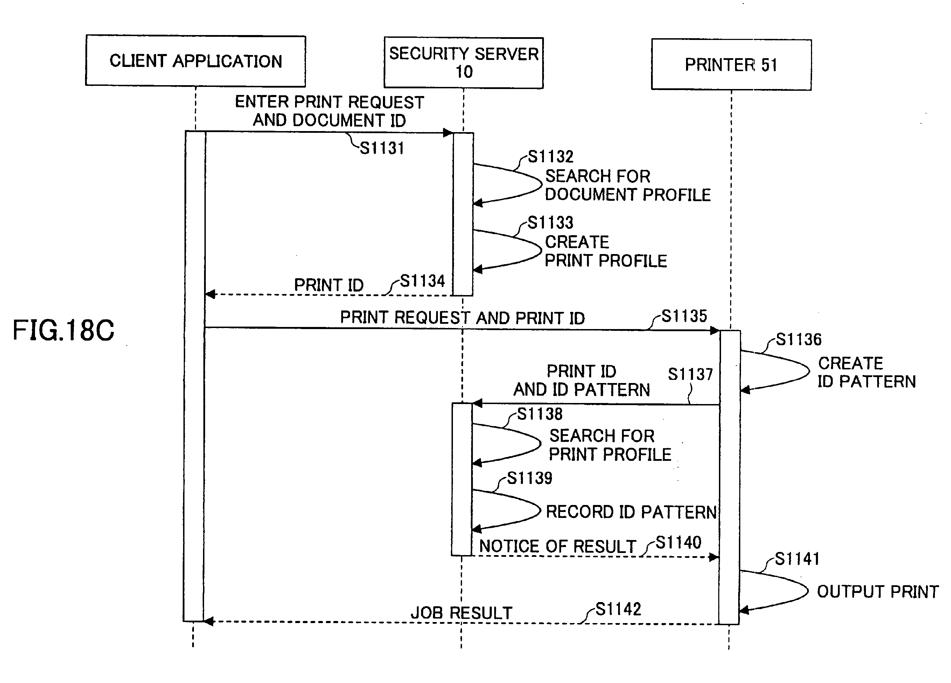

In FIG. 18C, the print ID pattern is generated at the printer 1. In response to a print request from the client application of PC 55, the security server 10 searches in the document profile managing table 15 creates a print profile for the requested print job, and updates the print profile managing table 16 (S1131-S1133). The security server 10 reports the print ID assigned to print profile to the client application (S1134).

The client application transmits the print ID, together with the print data, to the printer 52 (S1135). The printer 1 generates an ID pattern representing the print ID (S1136), outputs the print data and ID pattern in a hardcopy (S1141), and reports the job result to the client application (S1142). If the created ID pattern itself is recorded in the print profile, the ID pattern is transmitted from the printer 51 to the security server 10 (S1137) The security server 10 searches the corresponding print profile in the table 16 (S1138), records the ID pattern in the print profile (S1139), and reports the result to the printer 51 (S1140). The recording of the ID pattern (S1137-S1140) may be carried out after the print output (S1141).

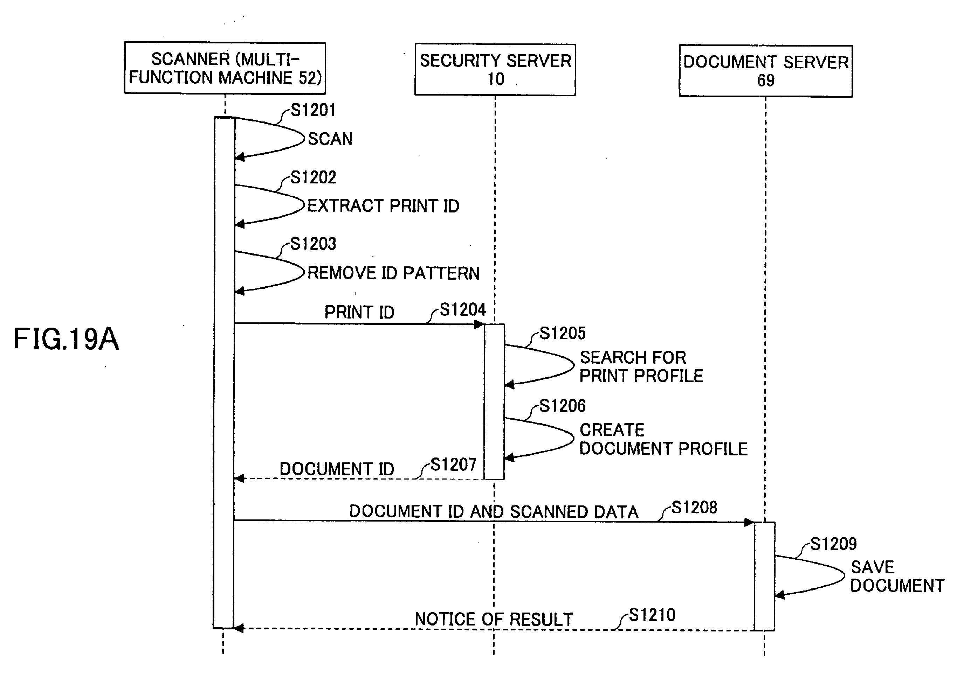

FIG. 19A through FIG. 19C are sequence diagrams of the profile processing process for a scan job carried out by the document security management system shown in FIG. 13.

In the sequence shown in FIG. 19A, a print ID pattern (for example, a QR code) printed on a hardcopy document is extracted at the scanner (multi-function machine) 52. The scanner 52 scans a hardcopy document (S1201), and it extracts a print ID based on the scanned ID pattern (S1202). The scanner 52 may remove the ID pattern from the scanned data, as necessary (S1203). The extracted print ID is transmitted to the security server 10 (S1204).

The security server 10 searches for the print profile that corresponds to the extracted print ID in the print profile managing table 16 (S1205). The security server 10 creates a new document profile for the scanned data and assigns a document ID (S1206). If there is source ID information descried in the searched print profile, the security server 10 includes the print ID and the associated source ID information in the newly created document profile. The Document ID of the new document profile is reported to the scanner 52 (S1207).

The scanner 52 transmits the document ID, together with the scanned data, to the document server 69 (S1206). The document server 69 stores the scanned data in association with the document ID (S1209), and reports the result to the scanner 52 (S1210).

The removal of the ID pattern from the scanned data is not necessarily performed by the scanner 52. For example, the ID pattern may be removed by a printer when the electronic document obtained by scan is printed out.

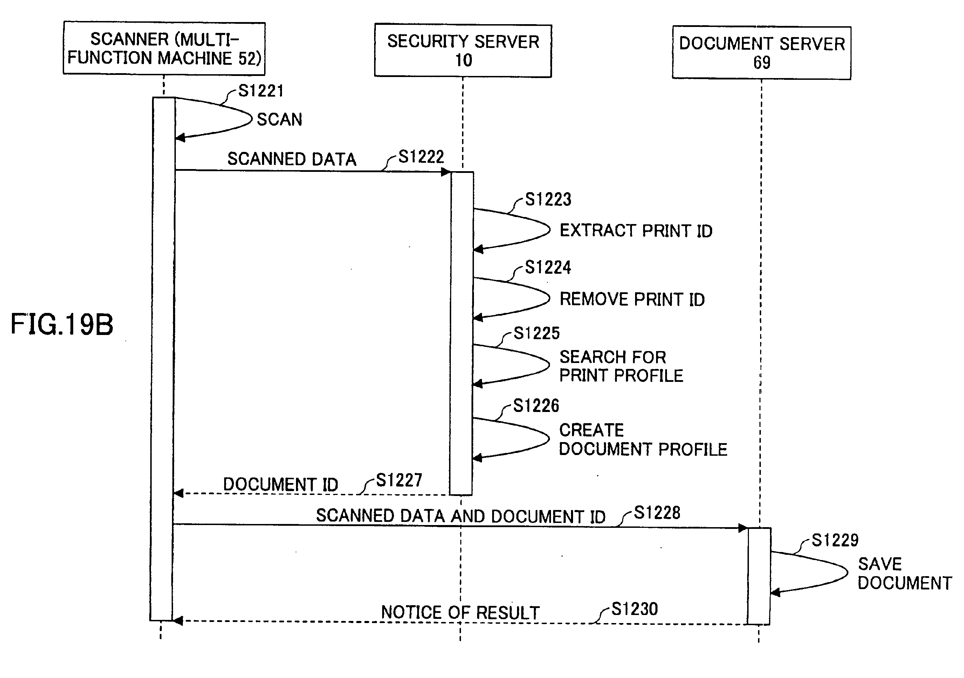

In FIG. 19B, extraction of the print ID is carried out by the security server 10. First, the scanner 52 scans a hardcopy document (S1221), and transmits the scanned data (electronic data) to the security server 10 (S1222). The security server 10 extracts the print ID from the received data (S1223), and removes the ID pattern from the data, as necessary (S1224). The security server 10 searches for the print profile that corresponds to the extracted print ID in the print profile managing table 16 (S1225). The security server creates a document profile for the scanned data, and assigns a document ID (S1226). If there is the source ID information described in the searched print profile, the security server 10 adds the source ID information and the print ID to the newly created document profile. The document ID is supplied to the scanner 52 (S1227). The scanner transmits the document ID and the scanned data to the document server 69 (S1228). The document server 69 stores the electronic data in association with the document ID (S1229), and returns the result to the scanner 52 (S1230).

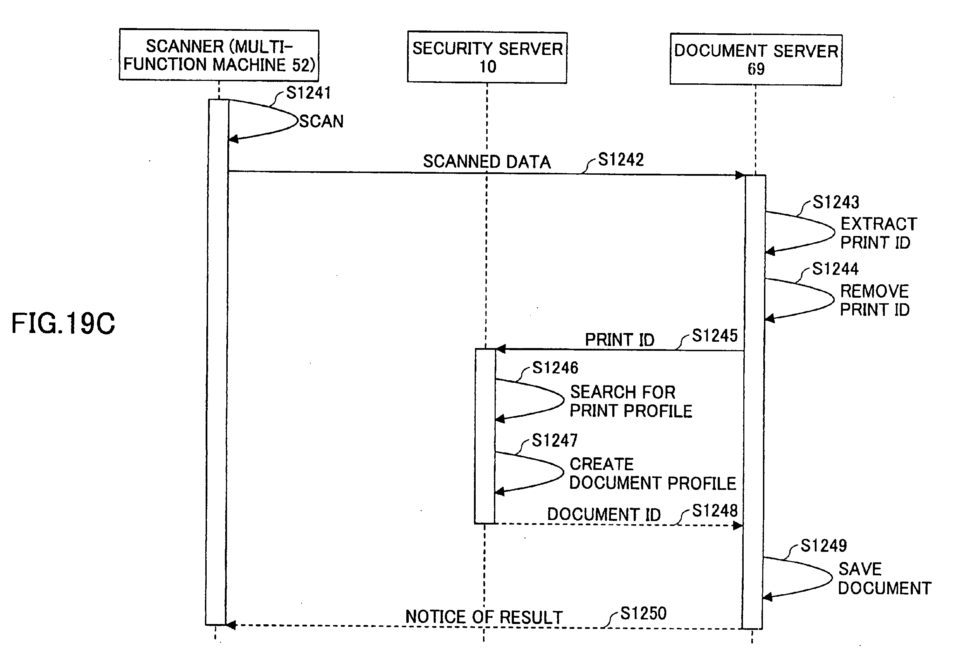

In FIG. 19C, extraction of the print ID is carried out by the document server 69. First, the scanner 52 scans a hardcopy document (S1241), and transmits the scanned data (electronic data) to the document server 69 (S1242). The document server 69 extracts the print ID from the received data (S1243), and removes the ID pattern from the data, as necessary (S1244). The document server 69 reports the extracted print ID to the security server 10 (S1245). The security server 10 searches for the print profile that corresponds to this print ID in the print profile managing table 16 (S1246). The security server creates a document profile for the scanned data, and assigns a document ID (S1247). If the source ID information is described in the searched print profile, the security server 10 adds the source ID information and the print ID to the newly created document profile. If there is no source ID information in the searched print profile, the security server 10 simply adds the print ID as the source ID to the new document profile. The document ID is reported from the security server 10 to the document server 69 (S1248). The scanner stores the scanned data in association with the document ID (S1249), and reports the result to the scanner 52 (S1250).

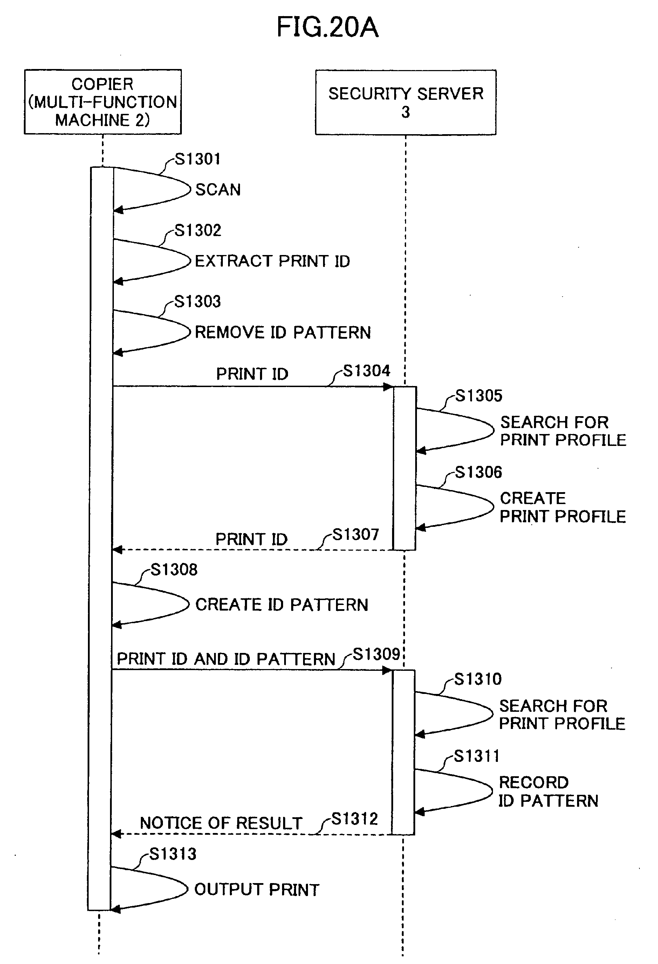

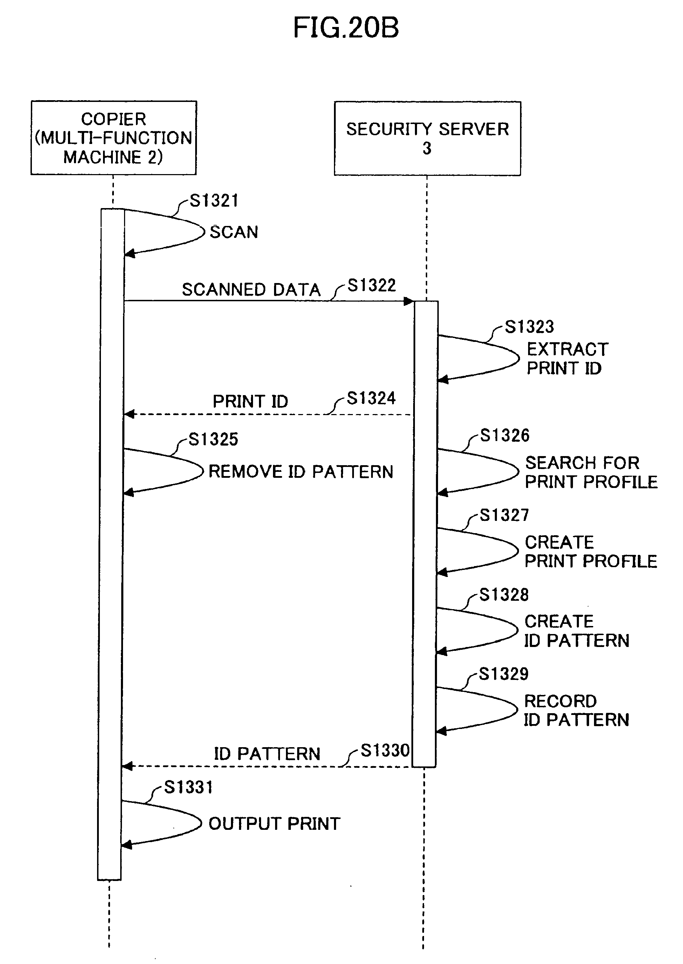

In FIG. 20A and FIG. 20B are sequence diagrams of the profile processing process carried out for a copy job in the document profile management system shown in FIG. 13.

In FIG. 20A, the ID pattern (e.g., the QR code) is processed at the copier (or the copy function of the multi-function machine) 52. First, the copier 52 scans a hardcopy document (S1301), extracts the print ID from the scanned data (S1302), and removes the ID pattern from the data, as necessary (S1303). The extracted ID pattern is reported to the security server 10 (S1304).

The security server 10 searches for the print profile corresponding to this print ID in the print profile managing table 16 (S1305) and checks if there is any source ID information described in this print profile. The security server 10 creates a new print profile for the currently requested copy job, and assigns a new print ID (S1306). If there is source ID information in the searched print profile, the source ID information is included in the newly created print profile, together with the extracted print ID. The security server 10 reports the new print ID assigned to the newly created print profile to the copier 52 (S1307).

The copier 52 generates an ID pattern representing the new print ID (S1308), and reports the new print ID and the corresponding ID pattern to the security server 10 (S1309). The security server 10 records the ID pattern in the new print profile (S1310 and S1311), and reports the result to the copier 52 (S1312). The copier 52 outputs the scanned image, together with the ID pattern, on paper (S1313)

In FIG. 20B, the ID pattern is processed at the security server 10. First, the copier 52 scans a hardcopy document (S1321), and transmits the scanned data to the security server 10 (S1322). The security server 10 extracts the print ID from the received data (S1323), and reports the extracted print ID to the copier 52 (S1324). The copier 52 removes the ID pattern from the data (S1325). The security server 10 searches for the print profile corresponding to the extracted print ID in the print profile managing table 16 (S1326) and determines whether there is any source ID information described in this print profile The security server 10 creates a new print profile for the currently requested copy job, and assigns a new print ID (S1327). If there is any source ID information in the searched print profile, that source ID information is included in the newly created print profile, together with the extracted print ID. The security server 10 generates an ID pattern corresponding to the newly created print profile (S1328), and records this ID pattern in table 16 (S1329). Then, the security server 10 reports the new print ID assigned to the new print profile to the copier 52 (S1330). The copier 52 outputs the scanned image, together with the received ID patter, on paper (S1331).

In this manner, every time a reproduction job (such as a copy job, a scan job, or a print job) is executed, a new print ID or a new document ID is assigned to the reproduced hardcopy or electronic data, and that new ID is recorded together with a sequence of source ID information representing the origin of the reproduced document.

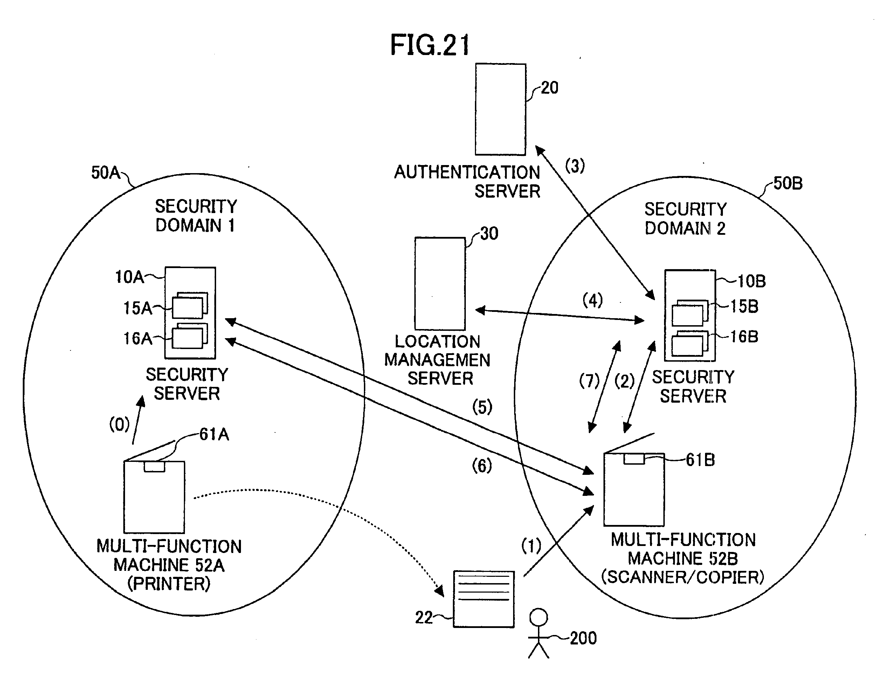

FIG. 21 is a schematic diagram, in which the above-described document security management system of the second embodiment is applied to multiple domains. A first security server 10A is placed in the first domain 50A to manage documents based on the first security policy. The security server 10A has a document profile managing table 15A and a print profile managing table 16A. A printer or a multi-function machine 52 is connected to the first security server 10A via a network (not shown). The multi-function machine 52 has an identifier extraction unit 61A.

Similarly, a second security server 10B is placed in the second domain 50B to manage documents based on the second security policy. The security server 10B has a document profile managing table 15B and a print profile managing table 16B. A scanner/copier or a multi-function machine 52 is connected to the second security server 10B via a network (not shown). The multi-function machine 52B has an identifier extraction unit 61B.

It is assumed that a hardcopy print 22 is output (printed out) by the printer or the multi-function machine 52A in the first domain 50A. The printer (multi-function machine) 52 reports the print ID assigned to the hardcopy document 22, and the ID pattern as necessary, to the security server 10A (the arrow (0)). The security server 10A creates a print profile containing source ID information indicating the origin of the printed document 22, and adds this print profile to the print profile managing table 16A

The user 200 is photocopying the hardcopy document 22 printed in the domain 50A, using the copier 52B of domain 50B under the different security policy (the arrow (1)). The copier 52B transmits an authentication request to the security server 10B, based on the print ID read from the hardcopy document 22 (the arrow (2)). The security server 10B asks for and receives system authentication and user authentication from the authentication server 20 (the arrow (3)), and queries the location management server 30 for the location of the domain 50A to which the hardcopy document 22 belongs (the arrow (4)).

When the domain 50A of the hardcopy document 22 is specified and reported to the copier 52B via the security server 10B, the copier 52B queries the security server 10A of domain 50A for permissibility of the current copy job (the arrow (5)). If the copy job is permissible, the copier 52B transmits the print ID extracted from the hardcopy document 22 to the security server 10A. The security server 10A searches for the print profile corresponding to the print ID in the table 16A, and returns the source ID information to the copier 52B (the arrow (6)). The copier 52B supplies the source ID information to the security server 10B. The security server 10B creates a new print profile containing the extracted print ID and the source ID information, assigns a new print ID to the newly created print profile, and adds the new print profile to the print profile managing table 16B Then the security server 10B transmits the new print ID to the copier 52B (the arrow (7)). The copier 52B outputs the scanned image, together with the new print ID, on paper.

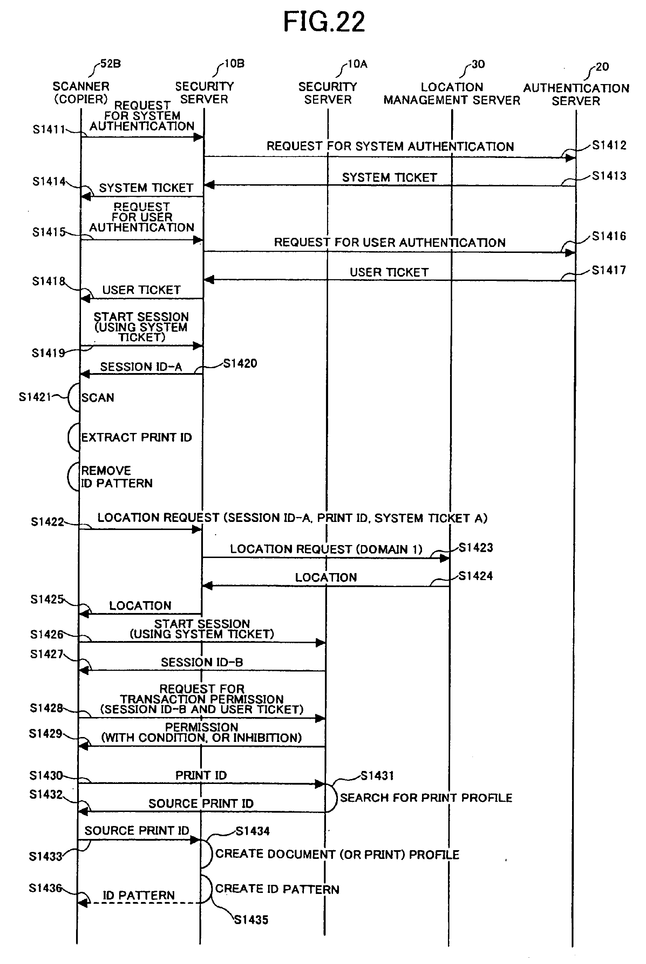

FIG. 22 is a sequence diagram of the document security management across domains illustrated in FIG 21. The sequences shown in FIG. 22 represent the process of arrow (2) and the subsequent processes.

In response to the copy request from the user 200, the copier 52B transmits a request for system authentication to the security server 10B (S1411). The security server 10B transmits the request to the authentication server 20 commonly used among domains (S1412). Upon authentication of the copier 52B, the authentication server 20 issues a system ticket to the security server 10B (S1413), which ticket is further supplied to the copier 52B from the security server 10B (S1414).

The copier 52B then transmits a request for user authentication for user 200 to the security server 10B (S1415). The security server 10B transmits the request, together with the user attribute information to the authentication server 20 (S1416). upon completion of user authentication, the authentication server 20 issues a user ticket to the security server 10B (S1417), which user ticket is then supplied to the copier 52B (S1418).

The copier 52B transmits a session start request to the security server 10B using the system ticket (S1419). The security server 20B supplies a session ID-A to the copier 52B (S1420).

The copier 52B scans the hardcopy document 22 to read the image formed on it, extracts the print ID, and remove the ID pattern from the scanned data (S1421). Then the copier 52B transmits a location request, together with the extracted print ID, to the security server 10B, using the session ticket and the session ID-A (S1422). The security server 10b queries the location management server 30 for the domain that controls the document represented by the extracted print ID (S1423). The location management server 30 specifies domain 50A based on the print ID, and reports the location information of the domain 50A to the security server 10B (S1424). The security server 10B forwards the location information to the copier 52B (S1425).

The copier 52B transmits a session start request to the security server 10A of domain 50A (S1426). The security server 10A issues a session ID-B to the copier 52B (S1427). The copier 52B queries the security server 10A for permissibility of the copy job, using the session ID-B and the user ticket (S1428).

The security server 10A determines the permissibility of the requested copy job, and if permissible, the security server 10A checks the conditions imposed on the permission of the copy job, referring to the rule table (not shown). The determination result is reported to the copier 52B (S1429). Upon receiving the permission, the copier 52B transmits the extracted print ID to the security server 10A (S1430). The security server 10A searches for the print profile corresponding to the print ID in the print profile managing table 16A (S1431), and reports the source ID information of this print profile to the copier 52B (S1432).

The copier 52B supplies the received source ID information to the security server 10B of domain 50B (S1433). The security server 10B creates a new print profile containing the source ID information and the extracted print ID (S1434). The security server 10B assigns a new print ID to the print profile, generates the ID pattern (S1435), and supplies the print ID and the associated ID pattern to the copier 52B (S1436). The copier outputs a duplicate with a new print ID, reproducing the scanned data and the ID pattern on the same paper. The new print ID assigned to the photocopy is managed, in association with the source ID information, in the print managing table 16B.

In this manner, even if reproduction of document into hardcopy and electronic data are implemented repeatedly across multiple domains using different security policies, the history of reproduction can be traced back and the security of the document can be maintained.

Next, explanation is made of a print ID printed on the hardcopy document according to the embodiment.

As an example of the ID pattern representing the print ID, a QR code or a two-dimensional barcode is used. The QR code is printed using a number of unit dots, each dot consisting of 2-square (2*2) of the minimum dot of the printer 51 (or the printer function of the multi-function machine 52) shown in FIG. 13. If a 1200 dpi printer is used, the diameter of the minimum dot of that printer is 21 µm, and therefore, the dot diameter of the QR code becomes 42 µm. The dot position is defined at a 6-pixel interval in the horizontal and vertical directions.

When the unit dots are arranged at all the dot positions to define a QR code, the dot occupancy with respect to the paper is only 2.8 %, and it is less than 5 % even with 50 % dot gain. Human eyes perceive the QR code as a bright gray background, and the images or text printed together with the QR code can be clearly perceived.

When a hardcopy document is distributed under security control using an identifier, it is undesirable for the identifier to be easily separated from the secret information printed on the paper for the purpose of tampering. In addition, since the QR code printed on paper through print jobs or copy jobs has to correctly function as the ID mark, durability against the reproducing process is required. Meanwhile, a certain effect for inhibiting a third party from misusing the document or violating, the rule can be expected if it is recognized at a glance that the hardcopy document bears some marking. The print ID attached to a hardcopy document need to satisfy these demands.

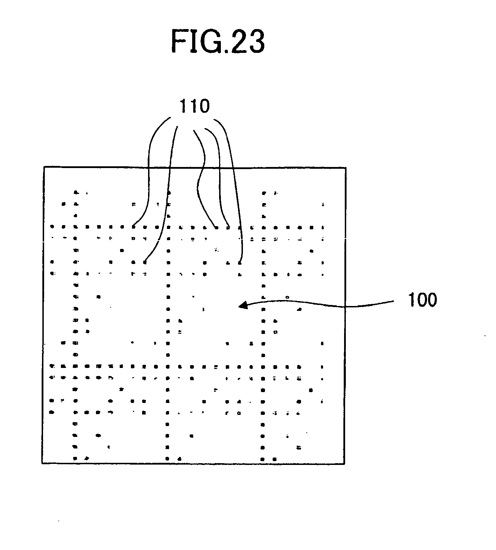

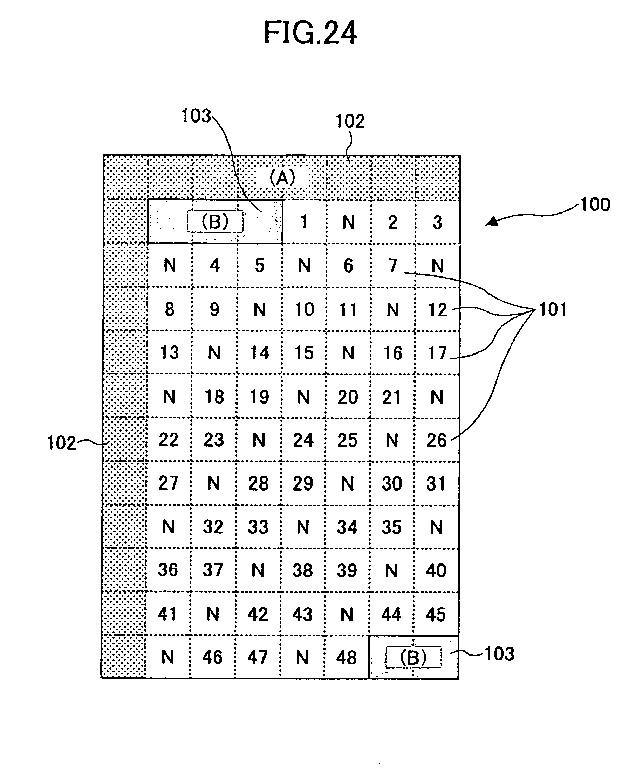

FIG. 23 and FIG. 24 illustrate an example of the QR code used in the embodiment, which is formed as a minute dot pattern.

As illustrated in FIG. 23, the QR code 100 consists of perceptible minute dots 110. Because the dots 110 are printed on paper, together with image information containing text and/or pictures, it is difficult to remove and delete only the QR code from the paper.

The QR code may include an error correction code. If a redundant layout repeating the same QR codes is employed, the identifier can be recovered even if a part of the dot array is erased. It is also possible to insert a noise component at prescribed pixel positions for the purpose of enhancing the security and preventing the QR code from being decoded.

As illustrated in FIG. 24, a QR code is represented as a dot pattern printed in a matrix of 8*12 cells 101. Each cell consists of 6*6 pixels, and a single dot is printed in a cell 101. The shaded region (A) indicates the frame 102 of the QR code 100 in which region the cells are always occupied by dots The regions (B) indicate the top left and the bottom right of the QR code 100. The three adjacent cells of top left region (B) are always occupied by dots, and the two adjacent cells of the bottom right region (B) are never occupied by dots.

The cells 101 numbered from 1 through 48 define an identifier and an error correction code. Noise components are inserted in the cells labeled "N". The odd-number cells 101 are used to represent the identifier, and the even-number cells 101 are used to represent the error correction code. In each of the odd-number cells 101, a dot is printed if a corresponding bit of the identifier is "1", while a dot is not printed if the bit is "0", from the most significant bit of the identifier. In the even-number cells 101, a dot is printed if a corresponding bit of the error correction code is "1", and is not printed if the bit is "0" from the most significant bit.

It is determined for each of the cells labeled "N" whether or not a dot is printed, based on a random number. If all the other cells existing in a line or a column containing the "N"-labeled cell are occupied by dots, then the dot is not printed in the N-labeled cell in order to distinguish the line or column from the frames 102 of the QR code 100. For example, since the top left region B is always filled with dots, the N-labeled cell arranged in this line is left white, without waiting for the determination by the random number, if the other cells 1-3 are used for bits "1" of the identifier and the error correction code.

In this embodiment, the rectangular region defining a QR code 100 includes 96 cells 101, each cell being provided for a dot. The total of 96 dots includes 19 dots for defining the frame 102 of the QR code, 3 dots for the top left region (B), 2 dots for the bottom right region (B), 24 dots for the 24-bit identifier, 24 dots for the 24-bit error correction code, and 24 dots for the noise component. By using a Reed-Solomon code for the error correction code, 12 bits out of the 48 bits can be recovered.

In this embodiment, 40*40 QR codes 100 are printed on a sheet of paper when a document is reproduced in a hardcopy print. The printed QR codes 100 are read by the ID extraction unit 61, compared with each other, and the most dominant dot pattern is determined as the ID pattern of this QR code.

Next, an update process of the dot pattern is explained below. During the copying of a document, the ID pattern (dot pattern) of the former print ID assigned to the original copy is removed from the scanned data, and a new print ID is added to the scanned data and printed out together with the scanned data.

First, the dot positions of the dot pattern are detected from the data acquired by scanning a hardcopy document. Because the frame 102 of each QR code 100 is fixed, the frame position can be detected accurately. Using the frame position as a reference, the dot positions defining the identifier (ID) and the error correction code (ECC) can be detected very accurately.

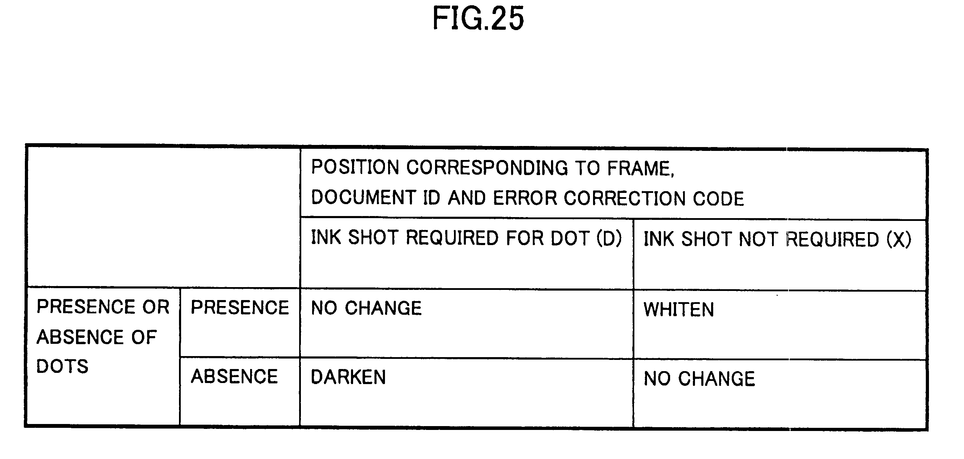

Then, some processing is performed on the detected dot positions according to the rule illustrated in FIG. 25. For a cell in which a dot is actually printed on a hardcopy, no change is made if that cell requires a dot to be printed for the newly assigned ID pattern. If it is unnecessary for that cell to have the dot printed for the new print ID, the cell is whitened. On the other hand, for a cell in which a dot is not printed on an actual hardcopy, the cell is darkened by a dot if that cell requires a dot to be printed for defining the new print ID. If it is unnecessary for the cell to be filled with a dot, no change is made.

Even if the cell filled with a dot for reproducing the image data (text or picture) is whitened for the new ID pattern, the image quality is not adversely affected because the area ratio of the dotted area with respect to the paper (of which the maximum is approximately 2%) little changes due to the whitening. The probability of necessity for whitening a cell is represented as: 0.5*(# of dots of ID and ECC)/(total # of dots of QR) =0.5*(24+24)/96=0.25.

Accordingly, the area ratio of the white cells to the entire area of the paper becomes about 0.5 %. For a hardcopy document in which the occupancy of the dotted area is low (6% to 20%), there is no conspicuous change in the image quality.

Next, explanation is made of how the history of document reproduction can be traced back from the print ID extracted from a printed (hardcopy) document By searching in the print profile managing table 16 shown in FIG. 14A, the print attribute information and the source ID information can be obtained. The currently processed hardcopy document is likely to be reproduced at the most-downstream. By referring to the print profile managing table 16, the document reproduction history can be traced back to the upstream.

For example, if the hardcopy document to be investigated was found at a place other than the security-controlled domains, information about the user who brought the document (in a form of electronic data or a hardcopy) outside the security-controlled domain can be determined by tracing back the source ID information described in the print profile managing table 16 to the upstream, and by referring to the detailed information and the access log shown in FIG. 15A, FIG. 15B, and FIG. 16.

The document reproduction history can also be traced back from the document ID assigned to an electronic document. If the electronic document is encrypted, the document is decrypted using decrypting software to extract the document ID. The document attribute and the source ID information can be obtained from the document profile managing table 15.

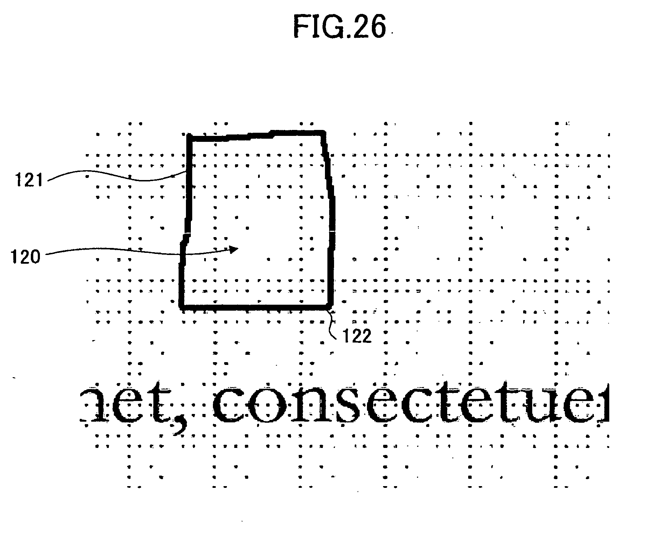

FIG. 26 illustrates another example of reading of a QR code representing a print ID from a printed document. In the example shown in FIG. 26, among a number of QR codes (dot patterns), a clearly printed dot pattern is boxed by a marker, and the boxed area is scanned to read the QR code.

The color of the marker is arbitrarily selected, or alternatively, it may be designated when scanning the QR mark. Any color may be used as long as the color can be read by the scanner and is not used in the printed document.

The boxed area is extracted from the scanned data. For example, the pixel values are raster-scanned from the top left of the image to the bottom right, and the position at which the color of the marker is first detected is determined as the top left corner of the boxed area. Similarly, the pixel values are raster-scanned from the bottom right toward the top left, and the position at which the color of the marker is first detected is determined as the bottom right corner of the box. Within the detected boxed area, the dot pattern is extracted.

This method requires manual selection and marking of a clearly printed dot pattern; however, it is advantageous in that the QR code can be read accurately, as compared with the previously described method for reading all the QR codes from the paper and selecting the most dominant pattern as the QR code.

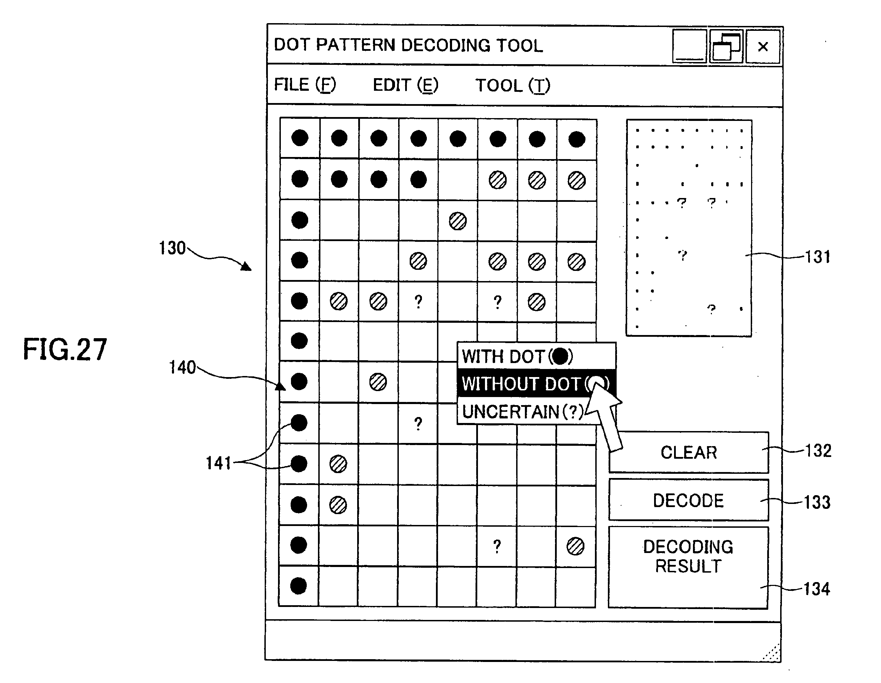

FIG. 27 is an example of the interface to allow a user to input each dot to be printed on the paper through a monitor screen 130. On the monitor screen 130 is displayed a decoded dot pattern. A matrix defining cells 140 corresponding to dot positions of a QR code is set in the decode tool window. Each cell 140 is an input interface for designating the presence or absence of a dot. The top line and the most-left column that represent the frame of the QRT code are fixed regions, in which black dots 141 are always input. The three adjacent cells in the second line also constitute a fixed region, in which the black dots are always input. The information representing the print ID or the error correction code is input through cells other than the fixed regions.

The "clear" bottom 132 is used to clear the previously input data and retry the input. When the "clear" button 132 is clicked, all the cells, except for the fixed regions, are reset and no dots are displayed in the cells of the input area.

The "decode" button 133 is used to decode the dot pattern to extract the print ID. When the "decode" button 133 is clicked after all the necessary dots have been input, the print ID is extracted, and the decoding result is displayed in the decoding result window 134.

At each cell, the statuses of dot presence ("with dot"), dot absence ("without dot"), and uncertain (question mark) are toggled by the left click of the mouse. It may be configured such that each status is selected from the pull-down menu by a right-click. The uncertain status may be left either "with dot" or "without dot", instead of inputting the question mark The dot input result may be displayed in the top right window 131.

The QR code is determined from the dot positions. the status of "with dot", "without dot", and "uncertain" are converted to corresponding bit values The status of "with dot" is set to "1", and "without dot" is set to "0". For the "uncertain" state, a test code setting the "uncertain" to "0", and another test code setting the "uncertain" to "1" are created. In this case, 2^(the number of "uncertain" cells) test patterns are generated, and decoded. Among the successfully decoded test patterns, the most dominant pattern is determined as the print ID.

If the "uncertain" state is designated in the error-correctable 12 dots among the 48 dots (excluding the noise component), the probability that the decoded pattern is correct is 100 % provided that all the cell information other than the "uncertain" status is correct. Accordingly, the upper limit of "uncertain" cells is determined carefully between dots 0-12, taking into account the possibility of error in the non-uncertain cells.

As has been described above, with the present invention, document security can be maintained across multiple domains using different security policies.

In addition, even if unauthorized reproduction of a security-controlled document occurs, the reproduction history can be easily traced back.

## Claims

1. A document security management method for controlling document security across a plurality of domains (50A, 50B), the method comprising the steps or
providing a hardcopy document;
the hardcopy document (2) bearing a domain ID,
the domain 1D representing a domain (50A, 50B) which created and manages the hardcopy document (2);
extracting, at an image forming and reproducing apparatus (1A) placed in a first domain (50A), the domain ID, from the hardcopy document (2) to be processed;
determining at a first security server (10A) of the first domain (50A) whether the document (2) to be processed is controlled in the first domain (50A), based on the extracted domain ID;
if the document (2) to be processed is not controlled in the first domain (50A), acquiring location information about a second domain (50B) that controls the document (2) to be processed; and
causing the image forming and reproducing apparatus (1A) to access a second security server (10B) provided in the second domain (50B) to confirm permissibility of the processing of the document (2), and
if permissible, causing the image forming and reproducing apparatus (1A) to process the hardcopy document (2) in the first domain (soya);
wherein the permissibility of the processing of the document (2) is based on a zone (50A, 50B) to which the image forming and reproducing apparatus (1A) belongs;
wherein the second security server (10B) comprises a rule table (11B) including a zone managing table describing which systems or apparatuses belong to which zone (50A, 50B).

2. The document security management method of claim 1, further comprising the steps of
authenticating an access of the image forming and reproducing apparatus (1A) to a system when the image forming and reproducing apparatus (1A) accesses the system; and
issuing a system ticket to the image forming and reproducing apparatus (1A) when the authentication succeeds.

3. The document security management method of claim 2, wherein the image forming and reproducing apparatus (1A) accesses the second security server (10B) using the system ticket and location information.

4. The document security management method of claim 1, further comprising the step of:
querying a location management server (30) provided commonly for the plurality of domains (50A, 50B) for the location information about the document (2) if the document (2) is not controlled in the first domain (50A).

5. A security server (10A) provided in a security domain (50A) to manage document security, comprising:
a table (15) describing a list of documents (2) under security control in the security domain (50A), each document (2) being in association with a document security level, wherein the security server (10A) is configured to:
receive ID information of a hardcopy document (2) to be currently processed from an image forming and reproducing apparatus (1A) of the security domain (50A), the ID information representing a domain that created and manages the hardcopy document (2), the ID information having being extracted from the hardcopy document (2) bearing the ID information by the image forming and reproducing apparatus (1A);
determine whether the document (2) is controlled in the security domain based on the ID information;
if the document (2) is not controlled in the security domain (50A), acquire location information about a second domain (50B) that controls the document (2) to be processed; and
cause the image forming and reproducing apparatus (1A) to access a second security server (10B) provided in the second domain (50B) to confirm permissibility of the processing of the document (2);
wherein the permissibility of the processing of the document (2) is based on the zone (50,A, 50B) to which the image forming and reproducing apparatus (1A) belongs;
wherein the second security server (10B) comprises a rule table (11B) including a zone managing table describing which systems or apparatuses belong to which zone (50A, 50B).

6. The security server (10A) of claim 5, wherein if the document (2) to be processed is controlled in the security domain (50A), the security server (10A) determines the permissibility to perform the processing of the document (2), with reference to the table (15).

7. The security server (10A) of claim 5, wherein the security server (10A) is further configured to;
receive an access request from the image forming and reproducing apparatus (1A); and have the access request authenticated by an authentication server (20); and
supply a system ticket to the image information and reproducing apparatus (1A) if the authentication succeeds.

8. A document security managing program installed in a security server (10A) for controlling document security in a security domain (50A), the program comprising instructions or
causing the security server (10A) to receive ID information of a hardcopy document (2) to be currently processed from an image forming and reproducing apparatus (1A) of the security domain (50A), the IF3 information representing a domain that created and manages the hardcopy document (2), the ID information having been extracted from the hardcopy document (2) bearing the ID information by the image forming and reproducing apparatus (1A);
causing the security server (10A) to determine whether the document (2) is controlled in the security domain (50A) based on the ID information;
if the document (2) is not controlled in the security domain (50A), causing the security server (10A) to acquire location information about a second domain (50B) that controls the document (2) to be processed; and
causing the security server (10A) to supply the location information to the image forming and reproducing apparatus so as to cause the image forming and reproducing apparatus (1A) to access a second security server (10B) provided in the second domain (50B) to confirm permissibility of the processing of the document (2);
wherein the permissibility of the processing of the document (2) is based on the zone (50A, 50B) to which the image forming and reproducing apparatus (1A) belongs;
wherein the second security server (10B) comprises a rule table (11B) including a zone managing table describing which systems or apparatuses belong to which zone (50A, 50B).

9. An image forming and reproducing apparatus (1A) provided in a security domain (50A) under security control of a first security server (10A), comprising:
a reading unit configured to read information from a hardcopy document (2);
an ID extraction unit (5A) configured to extract ID information about the hardcopy document (2) bearing the ID information from the scanned information, the ID information representing a domain that created and manages the hardcopy document (2); and
a controller configured to supply the ID information to the first security server (10A) to confirm whether the hardcopy document (2) is under the security control of the security domain (50A); receive a response from the first security server (50A); if the document (2) is not under the security control of the security domain (50A), acquire location information about a second domain (50B) that controls the hardcopy document (2); and access a second security server (10B) of the second domain (50B) to inquire about permissibility of reproduction of the scanned information;
wherein the permissibility of the processing of the document (2) is based on the zone (50A, 50B) to which the image forming and reproducing apparatus (1A) belongs;
wherein the second security server (10B) comprises a rule table (11B) including a zone managing table describing which systems or apparatuses belong to which zone (50A, 50B).

10. A program installed in an image forming and reproducing apparatus (1A) provided in a security domain (50A) under security control of a first security server (10A), the program comprising the instructions of causing the apparatus (1A) to:
read information from a hardcopy document (2) bearing an ID information, the ID information representing a domain that created and manages the hardcopy document (2);
extract the ID information about the hardcopy document (2) from the information;
supply the ID information to the first security server (10A) to confirm whether the hardcopy document (2) is under the security control of the security domain (50A);
if the document (2) is not under the security control of the security domain (50A), acquire location information about a second domain (50B) that controls the hardcopy document (2); and
access a second security server (10B) of the second domain (50B), based on the location information, to inquire about permissibility of reproduction of the scanned information;
wherein the permissibility of the processing of the document (2) is based on the zone (50A, 50B) to which the image forming and reproducing apparatus (it) belongs,
wherein the second security server (10B) comprises a rule table (11B) including a zone managing table describing which systems or apparatuses belong to which zone (50A, 50B),

11. A document security management system for controlling document security across a plurality of domains (50A, 50B), the system comprising:
a first security server (l0A) connected to an image forming/reproducing apparatus (A) in a first domain (50A) and configured to control document security in the first domain (50A); and
a location management server (30) configured to record multiple security servers (10A, 10B) in association with corresponding domains (50A, 50B); wherein the image forming/reproducing apparatus (1A) is configured to extract a domain ID representing a domain which created and manages a hardcopy document (2) from the hardcopy document (2) bearing the domain ID to be processed, and to transmit a session request, together with the extracted domain ID, to the first security server (10A);
the first security server (10A) is configured to determine whether the document (2) to be processed is controlled in the first domain (50A) based on the domain ID, and if the document (2) is not controlled in the first domain (50A), cause the image forming and reproducing apparatus (1A) to access a second security server (10B) that controls the document (2) to be processed in a second domain (50B) based on location information provided from the location management server (30) in order to confirm permissibility of the processing of the document (2); and
the image forming and reproducing apparatus (1A) is configured to process the hardcopy document (2) in the first domain (50A), if permissibility is confirmed;
wherein the permissibility of the processing of the document (2) is based on the zone (50A, 50B) to which the image forming and reproducing apparatus (1A) belongs;
wherein the second security server (10B) comprises a rule table (11B) including a zone managing table describing which systems or apparatuses belong to which zone (50A, 50B).

12. The document security management system of claim 11, further comprising:
an authentication server (20) connected to the first security server (10A) and configured to authenticate an access of the image forming and reproducing apparatus (1A) to the system, via the first security server (10A).

13. The document security management system of claim 12, wherein the authentication server (20) issues a system ticket two the image forming and reproducing apparatus (1A) when the authentication succeeded, and the image forming and reproducing apparatus (1A) accesses the second security server (10B) using the system ticket and location information provided from the location management server (30).

14. The document security management system of claim 11, wherein if the document (2) to be processed is not controlled in the first domain (50A), the first security server (10A) queries the location management server (30) for the location of the second security server (10B) that controls the document (2), and provides the location information to the image forming and reproducing apparatus (1A).

15. The document security management system of claim 13, wherein if the document (2) to be processed is not controlled in the first domain (50A), the image forming and reproducing apparatus (1A) directly accesses the location management server (30) to inquire about the location information of the second security server (10B) using the extracted domain ED and the system ticket.

16. The document security management system of claim 12, wherein the authentication server (20) is provided in common among the domains (50A, 50B).

17. The document security management system of claim 12, wherein the authentication server (20) is provided exclusively to the first security server (10A).

## Patentansprüche

1. Dokumentsicherheit-Managementverfahren zum Steuern der Dokumentsicherheit über mehrere Domänen (50A, 50B), wobei das Verfahren die folgenden Schritte umfasst:
Bereitstellen eines Hardcopy-Dokuments;
wobei das Hardcopy-Dokument (2) eine Domänen-ID trägt;
wobei die Domänen-ID eine Domäne (50A, 50B) repräsentiert, die das Hardcopy-Dokument (2) erzeugt hat und managt;
Extrahieren der Domänen-ID aus dem zu verarbeitenden Hardcopy-Dokument (2) in einer Bilderzeugungs- und Bildwiedergabevorrichtung (1A), die in einer ersten Domäne (50A) angeordnet ist,;
Bestimmen anhand der extrahierten Domänen-ID bei einem ersten Sicherheitsserver (10A) der ersten Domäne (50A), ob das zu verarbeitende Dokument (2) in der ersten Domäne (50A) kontrolliert wird;
falls das zu verarbeitende Dokument (2) in der ersten Domäne (50A) nicht kontrolliert wird, Erfassen von Ortsinformationen über eine zweite Domäne (50B), die das zu verarbeitende Dokument kontrolliert; und
Veranlassen, dass die Bilderzeugungs- und Bildwiedergabevorrichtung (1A) auf einen zweiten Sicherheitsserver (10B) zugreift, der in der zweiten Domäne (50B) vorgesehen ist, um die Zulässigkeit der Verarbeitung des Dokuments (2) zu bestätigen, und
falls zulässig, Veranlassen der Bilderzeugungs- und Bildwiedergabevorrichtung (1A), das Hardcopy-Dokument (2) in der ersten Domäne (50A) zu verarbeiten;
wobei die Zulässigkeit der Verarbeitung des Dokuments (2) auf einer Zone (50A, 50B) beruht, zu der die Bilderzeugungs- und Bildwiedergabevorrichtung (1A) gehört;
wobei der zweite Sicherheitsserver (10B) eine Regeltabelle (11 B) umfasst, die eine Zonenmanagementtabelle enthält, die beschreibt, welche Systeme oder Vorrichtungen zu der Zone (50A, 50B) gehören.

2. Dokumentsicherheit-Managementverfahren nach Anspruch 1, das ferner die folgenden Schritte umfasst:
Authentifizieren eines Zugriffs der Bilderzeugungs- und Bildwiedergabevorrichtung (1A) auf ein System, wenn die Bilderzeugungs- und Bildwiedergabevorrichtungen (1A) auf das System zugreift; und
Ausgeben eines System-Tickets an die Bilderzeugungs- und Bildwiedergabevorrichtung (1A), wenn die Authentifizierung erfolgreich ist.

3. Dokumentsicherheit-Managementverfahren nach Anspruch 2, wobei die Bilderzeugungs- und Bildwiedergabevorrichtung (1A) auf den zweiten Sicherheitsserver (10B) unter Verwendung des System-Tickets und der Ortsinformationen zugreift.

4. Dokumentsicherheit-Managementverfahren nach Anspruch 1, das ferner den folgenden Schritt umfasst:
Abfragen eines Ortsmanagementservers (30), der gemeinsam für die mehreren Domänen (50A, 50B) vorgesehen ist, bezüglich der Ortsinformationen über das Dokument (2), falls das Dokument (2) in der ersten Domäne (50A) nicht kontrolliert wird.

5. Sicherheitsserver (10A), der in einer Sicherheitsdomäne (50A) vorgesehen ist, um die Dokumentsicherheit zu managen, der umfasst:
eine Tabelle (15), die eine Liste von Dokumenten (2) beschreibt, die in der Sicherheitsdomäne (50A) einer Sicherheitskontrolle unterliegen, wobei jedem Dokument (2) ein Dokumentsicherheitsgrad zugeordnet ist, wobei der Sicherheitsserver (10A) konfiguriert ist, um:
ID-Informationen eines Hardcopy-Dokuments (2), das momentan verarbeitet werden soll, von einer Bilderzeugungs- und Bildwiedergabevorrichtung (1A) der Sicherheitsdomäne (50A) zu empfangen, wobei die ID-Informationen eine Domäne repräsentieren, die das Hardcopy-Dokument (2) erzeugt hat und managt, wobei die ID-Informationen aus dem Hardcopy-Dokument (2), das die ID-Informationen trägt, durch die Bilderzeugungs- und Bildwiedergabevorrichtung (1A) extrahiert worden sind;
zu bestimmen, ob das Dokument (2) in der Sicherheitsdomäne kontrolliert wird, anhand der ID-Informationen;
falls das Dokument (2) in der Sicherheitsdomäne (50A) nicht kontrolliert wird, Ortsinformationen über eine zweite Domäne (50B) zu ermitteln, die das zu verarbeitende Dokument (2) kontrolliert; und
die Bilderzeugungs- und Bildwiedergabevorrichtung (1A) dazu zu veranlassen, auf einen zweiten Sicherheitsserver (10B) zuzugreifen, der in der zweiten Domäne (50B) vorgesehen ist, um die Zulässigkeit der Verarbeitung des Dokuments (2) zu bestätigen;
wobei die Zulässigkeit der Verarbeitung des Dokuments (2) auf der Zone (50A, 50B) beruht, zu der die Bilderzeugungs- und Bildwiedergabevorrichtung (1A) gehört;
wobei der zweite Sicherheitsserver (10B) eine Regeltabelle (11B) enthält, die eine Zonenmanagementtabelle enthält, die beschreibt, welche Systeme oder Vorrichtungen zu der Zone (50A, 50B) gehören.

6. Sicherheitsserver (10A) nach Anspruch 5, wobei dann, wenn das zu verarbeitende Dokument (2) in der Sicherheitsdomäne (50A) kontrolliert wird, der Sicherheitsserver (10A) die Zulässigkeit der Ausführung der Verarbeitung des Dokuments (2) unter Bezugnahme auf die Tabelle (15) bestimmt.

7. Sicherheitsserver (10A) nach Anspruch 5, wobei der Sicherheitsserver (10A) ferner konfiguriert ist, um:
eine Zugriffsanforderung von der Bilderzeugungs- und Bildwiedergabevorrichtung (1A) zu empfangen; und die durch einen Authentifizierungsserver (20) authentifizierte Zugriffsanforderung zu besitzen; und
ein System-Ticket zu der Bilderzeugungs- und Bildwiedergabevorrichtung (1A) zu liefern, falls die Authentifizierung erfolgreich ist.

8. Dokumentsicherheit-Managementprogramm, das in einem Sicherheitsserver (10A) installiert ist, um die Dokumentsicherheit in einer Sicherheitsdomäne (50A) zu kontrollieren, wobei das Programm die folgenden Befehle umfasst:
Veranlassen des Sicherheitsservers (10A), ID-Informationen eines momentan zu verarbeitenden Hardcopy-Dokuments (2) von einer Bilderzeugungs- und Bildwiedergabevorrichtung (1A) der Sicherheitsdomäne (50A) zu empfangen, wobei die ID-Informationen eine Domäne repräsentieren, die das Hardcopy-Dokument (2) erzeugt hat und managt, wobei die ID-Informationen aus dem Hardcopy-Dokument (2), das die ID-Informationen trägt, durch die Bilderzeugungs- und Bildwiedergabevorrichtung (1A) extrahiert worden sind;
Veranlassen des Sicherheitsservers (10A) zu bestimmen, ob das Dokument (2) in der Sicherheitsdomäne (50A) kontrolliert wird, anhand der ID-Informationen;
falls das Dokument (2) in der Sicherheitsdomäne (50A) nicht kontrolliert wird, Veranlassen des Sicherheitsservers (10A), Ortsinformationen über eine zweite Domäne (50B) zu ermitteln, die das zu verarbeitende Dokument (2) kontrolliert; und
Veranlassen des Sicherheitsservers (10A), die Ortsinformationen zu der Bilderzeugungs- und Bildwiedergabevorrichtung zu liefern, um die Bilderzeugungsund Bildwiedergabevorrichtung (1A) dazu zu veranlassen, auf den zweiten Sicherheitsserver (10B), der in der zweiten Domäne (50B) vorgesehen ist, zuzugreifen, um die Zulässigkeit der Verarbeitung des Dokuments (2) zu bestätigen;
wobei die Zulässigkeit der Verarbeitung des Dokuments (2) auf der Zone (50A, 50B) beruht, zu der die Bilderzeugungs- und Bildwiedergabevorrichtung (1A) gehört;
wobei der zweite Sicherheitsserver (10B) eine Regeltabelle (11 B) umfasst, die eine Zonenmanagementtabelle enthält, die beschreibt, welche Systeme oder Vorrichtungen zu der Zone (50A, 50B) gehören.

9. Bilderzeugungs- und Bildwiedergabevorrichtung (1), die in einer Sicherheitsdomäne (50A) unter der Sicherheitskontrolle eines ersten Sicherheitsservers (10A) vorgesehen ist, die umfasst:
eine Leseeinheit, die konfiguriert ist, um Informationen von einem Hardcopy-Dokument (2) zu lesen;
eine ID-Extraktionseinheit (5A), die konfiguriert ist, um ID-Informationen über das Hardcopy-Dokument (2), das die ID-Informationen trägt, aus den gescannten Informationen zu extrahieren, wobei die ID-Informationen eine Domäne repräsentieren, die das Hardcopy-Dokument (2) erzeugt hat und managt; und
eine Steuereinheit, die konfiguriert ist, um die ID-Informationen zu dem ersten Sicherheitsserver (10A) zu liefern, um zu bestätigen, ob das Hardcopy-Dokument (2) der Sicherheitskontrolle der Sicherheitsdomäne (50A) unterliegt; eine Antwort von den ersten Sicherheitsserver (50A) zu empfangen; falls das Dokument (2) nicht der Sicherheitskontrolle der Sicherheitsdomäne (50A) unterliegt, Ortsinformationen über eine zweite Domäne (50B), die das Hardcopy-Dokument (2) kontrolliert, zu ermitteln; und auf einen zweiten Sicherheitsserver (10B) der zweiten Domäne (50B) zuzugreifen, um die Zulässigkeit der Wiedergabe der gescannten Informationen zu erfragen;
wobei die Zulässigkeit der Verarbeitung des Dokuments (2) auf der Zone (50A, 50B) beruht, zu der die Bilderzeugungs- und Bildwiedergabevorrichtung (1A) gehört;
wobei der zweite Sicherheitsserver (10B) eine Regeltabelle (11 B) umfasst, die eine Zonenmanagementtabelle enthält, die beschreibt, welche Systeme oder Vorrichtungen zu der Zone (50A, 50B) gehören.

10. Programm, das in einer Bilderzeugungs- und Bildwiedergabevorrichtung (1A) installiert ist, die in einer Sicherheitsdomäne (50A) vorgesehen ist, die einer Sicherheitskontrolle eines ersten Sicherheitsservers (10A) unterliegt, wobei das Programm Befehle umfasst, um die Vorrichtung (1A) dazu zu veranlassen:
Informationen von einem Hardcopy-Dokument (2), das ID-Informationen trägt, zu lesen, wobei die ID-Informationen eine Domäne repräsentieren, die das Hardcopy-Dokument (2) erzeugt hat und managt;
die ID-Informationen über das Hardcopy-Dokument (2) aus den Informationen zu extrahieren;
die ID-Informationen zu dem ersten Sicherheitsserver (10A) zu liefern, um zu bestätigen, ob das Hardcopy-Dokument (2) der Sicherheitskontrolle der Sicherheitsdomäne (50A) unterliegt;
falls das Dokument (2) nicht der Sicherheitskontrolle der Sicherheitsdomäne (50A) unterliegt, Ortsinformationen über eine zweite Domäne (50B) zu ermitteln, die das Hardcopy-Dokument (2) kontrolliert; und
auf einen zweiten Sicherheitsserver (10B) der zweiten Domäne (50B) anhand der Ortsinformationen zuzugreifen, um die Zulässigkeit der Wiedergabe der gescannten Informationen zu erfragen;
wobei die Zulässigkeit der Verarbeitung des Dokuments (2) auf der Zone (50A, 50B) beruht, zu der die Bilderzeugungs- und Bildwiedergabevorrichtung (1A) gehört,
wobei der zweite Sicherheitsserver (10B) eine Regeltabelle (11 B) umfasst, die eine Zonenmanagementtabelle enthält, die beschreibt, welche Systeme oder Vorrichtungen zu der Zone (50A, 50B) gehören.

11. Dokumentsicherheit-Managementsystem zum Kontrollieren der Dokumentsicherheit über mehrere Domänen (50A, 50B) hinweg, wobei das System umfasst:
einen ersten Sicherheitsserver (10A), der mit einer Bilderzeugungs- und Bildwiedergabevorrichtung (1A) in einer ersten Domäne (50A) verbunden ist und konfiguriert ist, um die Dokumentsicherheit in der ersten Domäne (50A) zu kontrollieren; und
einen Ortsmanagementserver (30), der konfiguriert ist, um mehrere Sicherheitsserver (10A, 10B) in Zuordnung zu entsprechenden Domänen (50A, 50B) aufzuzeichnen; wobei
die Bilderzeugungs- und Bildwiedergabevorrichtung (1A) konfiguriert ist, um eine Domänen-ID, die eine Domäne repräsentiert, die ein Hardcopy-Dokument (2) erzeugt hat und managt, aus dem Hardcopy-Dokument (2), das die Domänen-ID trägt und verarbeitet werden soll, zu extrahieren und um eine Sitzungsanforderung zusammen mit der extrahierten Domänen-ID zu dem ersten Sicherheitsserver (10A) zu senden;
wobei der erste Sicherheitsserver (10A) konfiguriert ist, um anhand der Domänen-ID zu bestimmen, ob das zu verarbeitende Dokument (2) in der ersten Domäne (50A) kontrolliert wird, wobei dann, wenn das Dokument (2) in der ersten Domäne (50A) nicht kontrolliert wird, die Bilderzeugungs- und Bildwiedergabevorrichtung (1A) dazu veranlasst wird, auf einen zweiten Sicherheitsserver (10B) zuzugreifen, der das zu verarbeitende Dokument (2) in der zweiten Domäne (5B) kontrolliert, anhand von Ortsinformationen, die von dem Ortsmanagementserver (30) bereitgestellt werden, um die Zulässigkeit der Verarbeitung des Dokuments (2) zu bestätigen; und
die Bilderzeugungs- und Bildwiedergabevorrichtung (1A) konfiguriert ist, um das Hardcopy-Dokument (2) in der ersten Domäne (50A) zu verarbeiten, falls die Zulässigkeit bestätigt wird;
wobei die Zulässigkeit der Verarbeitung des Dokuments (2) auf der Zone (50A, 50B) beruht, zu der die Bilderzeugungs- und Bildwiedergabevorrichtung (1A) gehört;
wobei der zweite Scherheitsserver (10B) eine Regeltabelle (11 B) umfasst, die eine Zonenmanagementtabelle enthält, die beschreibt, welche Systeme oder Vorrichtungen zu der Zone (50A, 50B) gehören.

12. Dokumentsicherheit-Managementsystem nach Anspruch 11, das ferner umfasst:
einen Authentifizierungsserver (20), der mit dem ersten Sicherheitsserver (10A) verbunden ist und konfiguriert ist, um einen Zugriff der Bilderzeugungs- und Bildwiedergabevorrichtung (1A) auf das System über den ersten Sicherheitsserver (10A) zu authentifizieren.

13. Dokumentsicherheit-Managementsystem nach Anspruch 12, wobei der Authentifizierungsserver (20) ein System-Ticket an die Bilderzeugungs- und Bildwiedergabevorrichtung (1A) ausgibt, wenn die Authentifizierung erfolgreich war, und die Bilderzeugungs- und Bildwiedergabevorrichtung (1A) auf den zweiten Sicherheitsserver (10B) unter Verwendung des System-Tickets und der Ortsinformationen, die von dem Ortsmanagementserver (30) bereitgestellt werden, zugreift.

14. Dokumentsicherheit-Managementsystem nach Anspruch 11, wobei dann, wenn das zu verarbeitende Dokument (2) in der ersten Domäne (50A) nicht kontrolliert wird, der erste Sicherheitsserver (10A) den Ortsmanagementserver (30) bezüglich des Orts des zweiten Sicherheitsservers (10B), der das Dokument (2) kontrolliert, abfragt und die Ortsinformationen für die Bilderzeugungs- und Bildwiedergabevorrichtung (1A) bereitstellt.

15. Dokumentsicherheit-Managementsystem nach Anspruch 13, wobei dann, wenn das zu verarbeitende Dokument (2) nicht in der ersten Domäne (50A) kontrolliert wird, die Bilderzeugungs- und Bildwiedergabevorrichtung (1A) direkt auf den Ortsmanagementserver (30) zugreift, um die Ortsinformationen des zweiten Sicherheitsservers (10B) unter Verwendung der extrahierten Domänen-ID und des System-Tickets zu erfragen.

16. Dokumentsicherheit-Managementsystem nach Anspruch 12, wobei der Authentifizierungsserver (20) für die Domänen (50A, 50B) gemeinsam vorgesehen ist.

17. Dokumentsicherheit-Managementsystem nach Anspruch 12, wobei der Authentifizierungsserver (20) ausschließlich für den ersten Sicherheitsserver (10A) vorgesehen ist.

## Revendications

1. Procédé de gestion de la sécurité de documents pour contrôler la sécurité de documents sur une pluralité de domaines (50A, 50B), le procédé comportant les étapes consistant à :
délivrer un document imprimé ;
le document imprimé (2) portant un domaine ID ;
le domaine ID représentant un domaine (50A, 50B) qui crée et gère le document imprimé (2) ;
extraire, dans un appareil de formation et de reproduction d'images (1A) placé dans un premier domaine (50A), le domaine ID, du document imprimé (2) à traiter ;
déterminer dans un premier serveur de sécurité (10A) du premier domaine (50A) si le document (2) à traiter est contrôlé dans le premier domaine (50A), en fonction du domaine ID extrait ;
si le document (2) à traiter n'est pas contrôlé dans le premier domaine (50A), acquérir une information d'emplacement concernant un second domaine (50B) qui contrôle le document (2) à traiter ; et
amener l'appareil de formation et de reproduction d'images (1A) à accéder à un second serveur de sécurité (10B) prévu dans le second domaine (50B) pour confirmer l'autorisation du traitement du document (2), et
s'il est autorisé, amener l'appareil de formation et de reproduction d'images (1A) à traiter le document imprimé (2) dans le premier domaine (50A) ;
dans lequel l'autorisation du traitement du document (2) est basée sur une zone (50A, 50B) à laquelle l'appareil de formation et de reproduction d'images (1A) appartient ;
dans lequel le second serveur de sécurité (10B) comporte une table de règles (11B) comprenant une table de
gestion de zone décrivant quels systèmes ou appareils appartiennent à cette zone (50A, 50B).

2. Procédé de gestion de la sécurité de documents selon la revendication 1, comportant en outre les étapes consistant à :
authentifier un accès de l'appareil de formation et de reproduction d'images (1A) à un système lorsque l'appareil de formation et de reproduction d'images (1A) accède au système ; et
émettre un ticket de système à l'appareil de formation et de reproduction d'images (1A) lorsque l'authentification a réussi.

3. Procédé de gestion de la sécurité de documents selon la revendication 2, dans lequel l'appareil de formation et de reproduction d'images (1A) accède au second serveur de sécurité (10B) en utilisant le ticket de système et l'information d'emplacement.

4. Procédé de gestion de la sécurité de documents selon la revendication 1, comportant en outre l'étape consistant à :
consulter un serveur de gestion d'emplacement (30) prévu communément pour la pluralité de domaines (50A, 50b) pour l'information d'emplacement concernant le document (2) si le document (2) n'est pas contrôlé dans le premier domaine (50A).

5. Serveur de sécurité (10A) prévu dans un domaine de sécurité (50A) pour gérer la sécurité de documents, comportant :
une table (15) décrivant une liste de documents (2) sous contrôle de sécurité dans le domaine de sécurité (50A), chaque document (2) étant associé à un niveau de sécurité de document, dans lequel le serveur de sécurité (10A) est configuré pour :
recevoir une information ID d'un document imprimé (2) à traiter présentement depuis un appareil de formation et de reproduction d'images (1A) du domaine de sécurité (50A), l'information ID représentant un domaine qui crée et gère le document imprimé (2), l'information ID ayant été extraite du document imprimé (2) portant l'information ID par l'appareil de formation et de reproduction d'images (1A);
déterminer si le document (2) est contrôlé dans le domaine de sécurité en fonction de l'information ID ;
si le document (2) n'est pas contrôlé dans le domaine de sécurité (50A), acquérir une information d'emplacement concernant un second domaine (50B) qui contrôle le document (2) à traiter ; et
amener l'appareil de formation et de reproduction d'images (1A) à accéder à un second serveur de sécurité (10B) prévu dans le second domaine (50B) pour confirmer l'autorisation de traitement du document (2) ;
dans lequel l'autorisation de traitement du document (2) est basée sur la zone (50A, 50B) à laquelle l'appareil de formation et de reproduction d'images (1A) appartient ;
dans lequel le second serveur de sécurité (10B) comprend une table de règles (11B) comprenant une table de gestion de zone décrivant quels systèmes ou appareils appartiennent à quelle zone (50A, 50B).

6. Serveur de sécurité (10A) selon la revendication 5, dans lequel, si le document (2) à traiter est contrôlé dans le domaine de sécurité (50A), le serveur de sécurité (10A) détermine l'autorisation d'effectuer le traitement du document (2), en référence à la table (15).

7. Serveur de sécurité (10A) selon la revendication 5, dans lequel le serveur de sécurité (10A) est en outre configuré pour :
recevoir une requête d'accès depuis l'appareil de formation et de reproduction d'images (1A) ; et
avoir la requête d'accès authentifiée par un serveur d'authentification (20) ; et
délivrer un ticket de système à l'appareil de formation et de reproduction d'images (1A) si l'authentification a réussi.

8. Programme de gestion de la sécurité de documents installé dans un serveur de sécurité (10A) pour contrôler la sécurité de documents dans un domaine de sécurité (50A), le programme comportant les instructions consistant à :
amener le serveur de sécurité (10A) à recevoir une information ID d'un document imprimé (2) à traiter présentement depuis un appareil de formation et de reproduction d'images (1A) du domaine de sécurité (50A), l'information ID représentant un domaine qui crée et gère le document imprimé (2), l'information ID ayant été extraite du document imprimé (2) portant l'information ID par l'appareil de formation et de reproduction d'images (1A) ;
amener le serveur de sécurité (10A) à déterminer si le document (2) est contrôlé dans le domaine de sécurité (50A) en fonction de l'information ID ;
si le document (2) n'est pas contrôlé dans le domaine de sécurité (50A), amener le serveur de sécurité (10A) à acquérir une information d'emplacement concernant un second domaine (508) qui contrôle le document (2) à traiter; et
amener le serveur de sécurité (10A) à délivrer l'information d'emplacement à l'appareil de formation et de reproduction d'images de manière à amener l'appareil de formation et de reproduction images (1A) à accéder au second serveur de sécurité (10B) prévu dans le second domaine (50B) pour confirmer l'autorisation du traitement du document (2);
dans lequel l'autorisation de traitement du document (2) est basée sur la zone (50A, 50B) à laquelle
l'appareil de formation et de reproduction d'images (1A) appartient ;
dans lequel le second serveur de sécurité (10B) comporte une table de règles (11B) comprenant une table de gestion de zone décrivant quels systèmes ou appareils appartiennent à quelle zone (50A, 50B).

9. Appareil de formation et de reproduction d'images (1A) prévu dans un domaine de sécurité (50A) sous contrôle de sécurité d'un premier serveur de sécurité (10A), comportant :
une unité de lecture configurée pour lire une information depuis un document imprimé (2) ;
une unité d'extraction d'ID (5A) configurée pour extraire une information ID concernant le document imprimé (2) portant l'information ID à partir de l'information balayée, l'information ID représentant un domaine qui crée et gère le document imprimé (2) ; et
un contrôleur configuré pour délivrer l'information ID au premier serveur de sécurité (10A) pour confirmer si le document imprimé (2) se trouve sous le contrôle de sécurité du domaine de sécurité (50A) ; recevoir une réponse depuis le premier serveur de sécurité (50A) ; si le document (2) ne se trouve pas sous le contrôle de sécurité du domaine de sécurité (50A), acquérir une information d'emplacement concernant un second domaine (50B) qui contrôle le document imprimé (2) ; et accéder à un second serveur de sécurité (10B) du second domaine (50B) pour se renseigner sur l'autorisation de reproduction de l'information balayée ;
dans lequel l'autorisation de traitement du document (2) est basée sur la zone (50A, 50B) à laquelle l'appareil de formation et de reproduction d'images (1A) appartient ;
dans lequel le second serveur de sécurité (10B) comporte une table de règles (11B) comprenant une table de gestion de zone décrivant quels systèmes ou appareils appartiennent à quelle zone (50A, 50B).

10. Programme installé dans un appareil de formation et de reproduction d'images (1A) prévu dans un domaine de sécurité (50A) sous contrôle de sécurité d'un premier serveur de sécurité (10A), le programme comportant les instructions consistant à amener l'appareil (1A) à :
lire une information à partir d'un document imprimé (2) portant une information ID, l'information ID représentant un domaine qui crée et gère le document imprimé (2) ;
extraire l'information ID concernant le document imprimé (2) à partir de l'information ;
délivrer l'information ID au premier serveur de sécurité (10A) pour confirmer si le document imprimé (2) se trouve sous le contrôle de sécurité du domaine de sécurité (50A) ;
si le document (2) ne se trouve pas sous le contrôle de sécurité du domaine de sécurité (50A), acquérir une information d'emplacement concernant un second domaine (50B) qui contrôle le document imprimé (2) ; et
accéder à un second serveur de sécurité (10B) du second domaine (50B), en fonction d'une information d'emplacement, pour se renseigner sur l'autorisation de reproduction de l'information balayée ;
dans lequel l'autorisation de traitement de document (2) est basée sur la zone (50A, 50B) à laquelle l'appareil de formation et de reproduction d'images (1A) appartient,
dans lequel le second serveur de sécurité (10B) comporte une table de règles (11B) comprenant une table de gestion de zone décrivant quels systèmes ou appareils appartiennent à quelle zone (50A, 50B).

11. Système de gestion de la sécurité de documents pour contrôler la sécurité de documents sur une pluralité de domaines (50A, 50B), le système comportant :
un premier serveur de sécurité (10A) relié à un appareil de formation/reproduction d'images (1A) dans un premier domaine (50A) et configuré pour contrôler la sécurité de documents dans le premier domaine (50A) ; et
un serveur de gestion d'emplacement (30) configuré pour enregistrer de multiples serveurs de sécurité (10A, 10B) associés à des domaines correspondants (50A, 50B); dans lequel
l'appareil de formation/reproduction d'images (1A) est configuré pour extraire un domaine ID représentant un domaine qui crée et gère un document imprimé (2) à partir du document imprimé (2) portant le domaine ID à traiter, et pour transmettre une requête de session, conjointement avec le domaine ID extrait, au premier serveur de sécurité (10A);
le premier serveur de sécurité (10A) est configuré pour déterminer si le document (2) à traiter est contrôlé dans le premier domaine (50A) en fonction du domaine ID, et si le document (2) n'est pas contrôlé dans le premier domaine (50A), pour amener l'appareil de formation et de reproduction d'images (1A) à accéder à un second serveur de sécurité (10B) qui contrôle le document (2) à traiter dans un second domaine (50B) en fonction d'une information d'emplacement délivrée depuis le serveur de gestion d'emplacement (30) afin de confirmer l'autorisation de traitement de document (2) ; et
l'appareil de formation et de reproduction d'images (1A) est configuré pour traiter le document imprimé (2) dans le premier domaine (50A), si l'autorisation est confirmée ;
dans lequel l'autorisation de traitement de document (2) est basée sur la zone (50A, 50B) à laquelle
l'appareil de formation et de reproduction d'images (1A) appartient ;
dans lequel le second serveur de sécurité (10B) comporte une table de règles (11B) comprenant une table de gestion de zone décrivant quels systèmes ou appareils appartiennent à quelle zone (50A, 50B).

12. Système de gestion de la sécurité de documents selon la revendication 11, comportant en outre :
un serveur d'authentification (20) relié au premier serveur de sécurité (10A) et configuré pour authentifier un accès de l'appareil de formation et de reproduction d'images (1A) au système, par l'intermédiaire du premier serveur de sécurité (10A).

13. Système de gestion de la sécurité de documents selon la revendication 12, dans lequel le serveur d'authentification (20) émet un ticket de système à l'appareil de formation et de reproduction d'images (1A) lorsque l'authentification a réussi, et l'appareil de formation et de reproduction d'images (1A) accède au second serveur de sécurité (10B) en utilisant le ticket de système et l'information d'emplacement délivrée depuis le serveur de gestion d'emplacement (30).

14. Système de gestion de la sécurité de documents selon la revendication 11, dans lequel, si le document (2) à traiter n'est pas contrôlé dans le premier domaine (50A), le premier serveur de sécurité (10A) demande au serveur de gestion d'emplacement (30) l'emplacement du second serveur de sécurité (10B) qui contrôle le document (2), et délivre l'information d'emplacement à l'appareil de formation et de reproduction d'images (1A).

15. Système de gestion de la sécurité de documents selon la revendication 13, dans lequel, si le document (2) à traiter n'est pas contrôlé dans le premier domaine (50A), l'appareil de formation et de reproduction d'images (1A) accède directement au serveur de gestion d'emplacement (30) pour se renseigner sur l'information d'emplacement du second serveur de sécurité (10B) en utilisant le domaine ID extrait et le ticket de système.

16. Système de gestion de la sécurité de documents selon la revendication 12, dans lequel le serveur d'authentification (20) est prévu en commun entre les domaines (50A, 50B).

17. Système de gestion de la sécurité de documents selon la revendication 12, dans lequel le serveur d'authentification (20) est prévu exclusivement pour le premier serveur de sécurité (10A).
